(19) Europäisches Patentamt
European Patent Office
Office européen des brevets

(11) Publication number: 0 037 266 A2

(12) **EUROPEAN PATENT APPLICATION**

(21) Application number: 81301336.4

(22) Date of filing: 27.03.81

(51) Int. Cl.[3]: G 01 K 11/16
G 01 K 3/00

(30) Priority: 31.03.80 US 136057
31.03.80 US 136076

(43) Date of publication of application:
07.10.81 Bulletin 81/40

(84) Designated Contracting States:
AT BE CH DE FR IT LI NL SE

(71) Applicant: RAYCHEM CORPORATION
300 Constitution Drive
Menlo Park California 94025(US)

(72) Inventor: Clarke, Raymond
789 Helena Drive
Sunnyvale California 94087(US)

(72) Inventor: Sandberg, Chester Ledlie
758 Torreya Court
Palo Alto California(US)

(74) Representative: Jay, Anthony William et al,
Raychem Limited Patent & Legal Department Faraday
Road Dorcan
Swindon Wiltshire(GB)

(54) **Method and apparatus for controlling the temperature of or indicating the presence of a material by means of a waveguide, heat activatable articles incorporating waveguides; and novel waveguides and a method of making such waveguides.**

(57) Method and apparatus for controlling temperature of a material by means of an optical waveguide having a core and cladding, the refractive index of the core becoming lower than that of the cladding to induce blackout of light transmission at pre-selected temperatures. The material is heated or cooled as indicated by the change in light transmission at or near the blackout temperature, which phenomenon can also be used to detect the presence or level of a material. New waveguides comprising several sections having different blackout temperatures are provided.

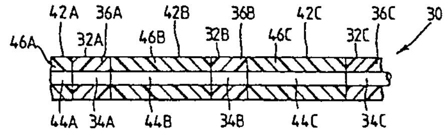


Fig. 13

EP 0 037 266 A2

**COMPLETE DOCUMENT**

The present invention is directed to methods for using fiber optic waveguides for temperature monitoring.

The use of fiber optics for non-interferometric measurement of temperatures has been described in a paper by Gottlieb et al presented at the Electro-Optics conference in Anaheim, California in October, 1978. Gottlieb et al proposed that the loss of light to the cladding of a waveguide depends upon the temperature of the waveguide. In U.S. Patent No. 4,151,747 issued to Gottlieb et al, there are described fiber optic temperature sensors.

The present invention provides a method of controlling the temperature of a material comprising the steps of:

(a) placing at least part of a waveguide in thermal communication with the material so that the temperature of the waveguide is responsive to the temperature of the material, the waveguide comprising a core and a cladding disposed on and around the exterior surface of the core, the said part of the waveguide undergoing blackout at a preselected blackout temperature,

(b) directing light into the waveguide,

(c) monitoring the intensity of the light transmitted along the waveguide so as to detect a substantial change in the said intensity when the temperature of the waveguide approaches the blackout temperature and,

(d) when the said substantial change occurs, heating or cooling the material to maintain its temperature above or below a preselected limit.

Another aspect of the present invention provides a method of indicating the presence or absence of a material comprising the steps of:

(a) placing at least part of waveguide in a position such that it is at a first temperature when the material is present and is at a second temperature when the material is absent, the waveguide comprising a core and cladding disposed on and around the exterior surface of the core, the said part of the waveguide undergoing blackout at a preselected blackout temperature within the range from the said first temperature to the said second temperature,

(b) directing light into the waveguide, and

(c) monitoring the intensity of light transmitted along the waveguide so as to detect a substantial change in the said intensity when the temperature of the waveguide approaches the blackout temperature.

The waveguides referred to herein comprise a core and a cladding disposed on and around the exterior surface of the core, where at least a portion of the waveguide exhibits blackout at a selected blackout temperature. By "blackout", there is meant that on one side of the blackout temperature or temperature range, the waveguide transmits light of a selected wavelength, but on the opposite side of the blackout temperature or temperature range, substantially no light of that wavelength is transmitted through the waveguide. This blackout phenomenon occurs when the index of refraction of the core and the index of refraction of the cladding become about equal. The blackout can also be the result of crystallization of the cladding, crystallization causing a change in the refractive index of the cladding and/or light scattering.

The invention also provides a novel waveguide comprising two connected sections, a first section and a second section, the first section comprising a first core and a first cladding disposed on and around the exterior surface of the first core, and the second section comprising a second core and a second cladding disposed on and around the exterior surface of the second core, the first section of the waveguide exhibiting blackout at a first selected temperature, at which first selected temperature the second section transmits light.

The invention provides the opportunity to use fiber optic systems in applications never heretofore thought possible, it now being possible to tailor make waveguides so that they blackout at selected temperatures.

In applications where it is desirable to keep water from freezing, it is necessary that the waveguide exhibit a blackout temperature slightly above 0°C. Such a waveguide can be formed with a fiber core material and a cladding having a crystalline melting point slightly greater than 0°C so that the refractive index of the cladding is less than the refractive index of the core at temperatures greater than the crystalline melting point of the cladding and the refractive index of the cladding is greater than or equal to the refractive index of the core at temperatures less than or equal to the crystalline melting point of the cladding. Claddings having a crystalline melting point at temperatures slightly greater than 0°C are claddings comprising polydialkyl siloxane where one alkyl side chain comprises at least 10 carbon atoms and the other side chain is a methyl, ethyl, or propyl group.

Another waveguide which can exhibit blackout at temperatures slightly above 0°C is a waveguide having a cladding comprising a polyalkylphenyl siloxane, where the phenyl content of the siloxane based upon the total weight of the siloxane is at least about 15%.

Another useful waveguide is one that transmits light within a selected temperature range $T_1$ to $T_2$. Such a waveguide comprises a high loss core, a light transmissive layer disposed on and around the core, and an exterior cladding disposed on and around the light transmissive layer. The refractive index of the light transmissive layer is greater than the refractive indices of both the core and the exterior cladding at temperatures within the selected temperature range, is less than or equal to the refractive index of the core at temperatures less than or equal to $T_1$, and is less than the refractive index of the exterior cladding at temperatures greater than or equal to $T_2$.

In some applications, it is desirable that once a waveguide undergoes a substantial change in its light transmission properties, that change be permanent and irreversible.

In some applications, only a portion of a waveguide needs to exhibit blackout as a result of temperature change. A single waveguide can include a plurality of sensing elements that exhibit blackout at different temperatures, or a plurality of sensing elements, each of which exhibits blackout at the same temperature. The sensing elements can be adjacent to each other or separated by sections of the waveguide that do not exhibit blackout.

These novel waveguides provide the opportunity to use fiber optic systems in applications never heretofore thought possible. It is now possible to tailor make waveguides so that they blackout at selected temperatures. Among the applications for these waveguides are methods and systems for maintaining a material within a selected temperature range and methods and systems for detecting fires.

Among the applications for these waveguides are methods and systems for maintaining a material within a selected temperature range. In such an application, at least part of a waveguide is placed in thermal communication with the material so that the temperature of said part of the waveguide is responsive to the temperature of the material. The waveguide is chosen so that said part of the waveguide exhibits blackout at a selected blackout temperature at about the bottom or about the top of the selected temperature range. Light is directed at one end of the waveguide and the intensity of light transmitted by said part of the waveguide is monitored. The onset of a substantial change in the intensity of light transmitted by said part indicates that the material is at a temperature near the top or bottom of the selected temperature range. When the substantial change in the intensity of the light transmitted by said part of the waveguide occurs, the temperature of the material is adjusted so that it is maintained within the selected temperature range.

Other systems and methods which can use these novel waveguides include systems and methods for preventing a material from undergoing a change in phase, such as preventing liquids from freezing; systems and methods for preventing the viscosity of a liquid in a pipeline from increasing

above a selected value; systems and methods for detecting fire; systems and methods for regulating the charging of batteries; and systems and methods for applying an article containing a heat-activatable material to a substrate, such as a heat-recoverable tubular sleeve containing a heat-activatable adhesive to a pipe. In this last application, the waveguide is placed in thermal communication with the article so that the temperature of the waveguide is responsive to the temperature of the heat-activatable material. The waveguide is selected so that its blackout temperature is no less than the temperature at which the heat activatable material is activated. Light is directed at one end of the waveguide and the intensity of light transmitted by the waveguide is monitored. The heat-recoverable material is heated at least until the intensity of light transmitted by the waveguide has undergone a substantial change.

These and other features, aspects, and advantages of the present invention will become better understood with references to the appended claims, the following description, and accompanying drawings, where:

Figure 1 is a graph of calculated change in refractive index vs. temperature for two materials for preparing waveguides;

Figure 2 presents graphs of attenuation vs. temperature for different types of waveguides, demonstrating the blackout that can occur as the temperature of the waveguide is reduced;

Figure 3 is a graph of attentuation vs. temperature for a waveguide and demonstrates that blackout can occur when the temperature of a waveguide is increased;

Figure 4 is a graph of attentuation vs. temperature for a waveguide showing low temperature transmission characteristics;

Figure 5 is a cross-sectional view of a three-layer waveguide;

Figure 6 is a graph of attenuation vs. temperature for a waveguide as shown in Fig. 5 where the core is glass and the outer two layers are cladding materials;

Figure 7 is a graph of attenuation vs. temperature for a three layer waveguide where the inner and outer layers are cladding material and the middle layer is a light transmissive material;

Figure 8 is a graph of refractive index vs. temperature of the components of the three layer waveguide upon which Fig. 7 is based;

Figures 9 and 10 are graphs of attenuation vs. temperature for the waveguides of Examples 1 and 2, respectively, presentged herein below;

Figure 11 is a graph of attenuation vs. temperature for four waveguides which can be used for maintaining a material with a selected temperature range of $T_1$ to $T_2$;

Figure 12 is a cross-sectional view of a heat-shrinkable material having a heat-activatable adhesive layer and a waveguide, the waveguide detecting the temperature to which the heat-shrinkable sleeve and the adhesive layer are heated; and

Figure 13 shows a waveguide having sections with different light transmitting properties.

The present invention is directed to the use of fiber optic waveguides as temperature sensors. Use is made of the principle that waveguides can be prepard so that at a selected temperature or within a selected temperature range, the waveguide can exhibit blackout, i.e., the waveguide transmits substantially no light. Blackout is detected with a monitor in that it is determined that the light transmission property of the waveguide has undergone a substantial change. As used herein, the term "substantial change" in light transmission property refers to a decrease or increase of at least 3 db (decibels), and preferably at least about 5 db, amounts that can be detected wsith state-of-the-art monitors. For example, a substantial change can be a change in attenuation from 5 db up to 8 db, from 20 db up to 25 db, 10 db down to 7 db, or 25 db down to 20 db.

The "blackout temperature" is the temperature or temperature range where blackout occurs. It is characterised by a substantial change in attenuation over a very small temperature change, and generally over a temperature change of 3°C or less. In other words, preferably a plot of attenuation vs. temperature has a positive slope of at least about 1 db/(1°C) or less, at the blackout temperature.

As used herein, the term "sensing element" refers to a waveguide or a portion of a waveguide that exhibits blackout at one or more selected temperatures or temperature ranges.

To determine if a substantial change in the light transmission property of a waveguide has occured, it is necessary to monitor the intensity of light transmitted by the waveguide. As used herein, the term "monitoring" the intensity of the light refers to monitoring light at either end of the waveguide using conventional monitoring equipment. For example, using an optical time domain reflectometer such as Model ODTR-103 sold by Orionics, Inc. of Albuquerque, New Mexico, it is possible to monitor for transmitted light at the same end of a waveguide at which light pulses are launched into the waveguide.

In one version of the present invention, a waveguide can undergo a permanent change in its light transmission properties after its temperature is increased or lowered to a selected temperature. By the term "permanent" change, there is meant that the change in light transmission properties is irreversible. For example, a waveguide can be prepared that until it is heated to a temperature greater than about 100°C, it is substantially incapable of transmitting light, but once it is heated to 100°C, it will transmit light, even if subsequently, the temperature of the waveguide is lowered to below 100°C.

Waveguides consisting of a variety of materials have been developed in the prior art. For example, waveguides consisting of a glass fiber core and glass cladding, glass cladding and a liquid core, a polymeric fiber core and polymeric

cladding, and a glass fiber core and polymeric cladding are known. U.S. Patent application Serial No. 964,506 filed by Ellis et al on November 29, 1978, which is incorporated herein by reference, is directed to waveguides comprised of a quartz glass core and polymeric cladding of polydimethyl siloxane. U.S. Patent No. 3,819,250 issued to Kibler describes a waveguide comprising a quartz cladding and a liquid core which can be carbon tetrachloride.

The effectiveness of the present invention relies upon the use of a waveguide where the refractive index of the core and the refractive index of the cladding change with temperature at different rates. For example, silica has a much lower coefficient of thermal expansion than polymers in general, and especially siloxanes. Because of this, the refractive index of a siloxane cladding changes much more rapidly with temperature than with a silica core. Using the expression $\frac{1}{P} \frac{dP}{dT} = -q\ (n)$ (Polymer Handbook, Immergut & Bandrup) it is possible to calculate the refractive indices of a core and a cladding vs. temperature. For example, Fig. 1 presents the calculated change in refractive index vs. temperature for silica and two commercially-available siloxanes, Sylgard 184 and GE 670. Sylgard 184 is branches polydimethyl siloxane with some phenyl substitution available from Dow Corning. GE 670 is a branched polydimethyl siloxane available from General Electric.

In order for a waveguide to transmit light, it is necessary that the refractive index of the cladding be less than the refractive index of the core. When the refractive index of the core and the cladding are about equal, light is no longer contained by the cladding and a blackout occurs.

Fig. 2 shows the blackout phenomenon for a number of commercially available siloxanes coated on a silica fiber. Fig. 2 presents attenuation in db vs. temperature for GE 670, Sylgard 184, and GE 655 claddings on a silica core. The waveguides were about 100 meters long. The silica core was about 200 microns in diameter and the cladding was about 20 microns thick. GE 655 is branches polydimethyl siloxane with some phenyl substitution. The data presented in Fig. 2 were obtained by measuring the attenuation of the waveguide resulting from the waveguide being cooled at 2°C/minute. The blackout temperatures shown for the GE 670 and Sylgard 184 clad fibers correlate approximately with the crossover points in refractive index shown in Fig. 1.

In practice, as the temperature of one of the waveguides of Fig. 2 is decreased, a substantial change in attenuation is noted until eventually no light is transmitted. This phenomenon occurs even if only a very short portion of a long waveguide is cooled to the blackout temperature . For example, cooling a one centimeter length of a one kilometer long waveguide to the blackout temperature can be detected as a substantial increase in attenuation of transmitted light.

The reverse of this phenomenon also occurs. As the GE 670/silica, Sylgard 184/silica, and GE 655/silica waveguides are heated from a temperature of -100°C to a temperature greater than -40°C, the amount of light tansmitted by the waveguide increases. Initially, substantially no light is transmitted, until eventually light is transmitted by the waveguides.

In some applications, it is desirable that the waveguide exhibit blackout as its temperature is raised. The attenuation of such a waveguide is shown in Fig. 3, where the waveguide exhibits blackout at about 50°C. At temperatures less than about 50°C, the waveguide transmits light. A waveguide with a cladding of silica, the exterior surface of which is coated with a material that will inhibit Light Propagation in the cladding i.e. a light absorptive material such as polymethylphenyl siloxane having an index of refraction of about 1.50 containing about 5% by weight of carbon black, and a core pf polymethylphenyl siloxane with a refractive index of 1.47 at 23°C exhibits an attenuation vs. temperature curve similar to that shown in Fig. 3. A disadvantage with such a waveguide is that even at temperatures at which it transmits light, the amount of attenuation is substantially more than is obtained with a waveguide with a silica core because silica has much better optical properties than polymethylphenyl siloxane. However, this disadvantage is not important where only a short waveguide is required, or where a short sensing element is incorporated such as by splicing into a long waveguide, where the remainder of the waveguide has excellent light transmission properties.

Another example of a waveguide that can exhibit blackout as its temperature is increased is the waveguide having a silica cladding and a liquid core described in the above-mentioned Kibler Patent No. 3,819,250. With a liquid core of carbon tetrachloride, blackout can occur at a temperature of about 25°C, provided the exterior surface of the silica tube is coated with a light absorptive material which prevents light transmission within the silica.

Another waveguide that exhibits blackout as its temperature is increased is one having a core of polymethylphenyl siloxane containing 12% phenyl by weight, and a cladding of a Kynar copolymer such as Kynar 7200 available from Pennwalt corporation, which is a copolymer of vinylidine fluoride and tetrafluoro ethylene.

It is important to be able to control the temperature at which blackout occurs. For example, for heat tracing of a pipeline containing an aqueous fluid, it is desirable that blackout occur at a temperature slightly greater than freezing so that a heating element can be activated before the water freezes. One method to control the blackout temperature of a waveguide is to vary the refractive index of the cladding, the core, or both. For example, the waveguide comprising a silica core and GE 655 cladding was soaked in bromonapthalene which has a refractive index of 1.61. This raised the refractive index of the cladding, which had the effect of raising the blackout temperature. As shown in Fig. 2, the blackout temperature of this waveguide was raised to about 5°C. Other additives and dopants can be added to a cladding to either raise or lower its refractive index, depending upon the blackout temperature desired. Preferably the dopant used is non-volatile so that it remains permanently in the cladding or core. Satisfactory dopants for siloxane claddings include monomeric high boiling materials which are comnpatible with the siloxane cladding. Examples of dopants which can be used to raise the refractive index of siloxane cladding are 2, 2-dimethyltetraphenylcyclotrisiloxane; 1,1,1,5,5, 5-hexa methyldiphenyltrisiloxane; hexaphenylcyclotrisiloxane; tetraphenylsilane; tetraphenylcyclotrisiloxane;

1,1,1,5,5,5-hexamethyldiphenyl trisiloxane; hexaphenylcyclotrisiloxane; tetraphenylsilane; and diallyldiphenylsilane. The cladding can be irradiated to about 5 Mrads with an electron beam subsequent to imbibing in the dopant to permanently graft the dopant to the polymeric cladding. Other dopants can be introduced prior to the curing process. From 5 to 40 parts by weight of dopant per 100 parts by weight of polymeric cladding is usually sufficient.

Other materials which may be used as dopants are low molecular weight chlorinated phenylsiloxanes and nitrile containing siloxanes.

Monomeric high boiling materials such as neopentylglycolpolyadipate and paraffin oils which are not siloxanes can be used as dopants in small quantities, but they suffer from the fact that they are inadequately compatible with siloxane cladding and are expelled from the cladding with time.

Another approach that can be used to provide a waveguide with a higher blackout temperature than the blackout temperatures obtained with conventional silica/polydimethyl siloxane claddings is the development of waveguides comprised of materials heretofore not used as cladding materials. Novel cladding materials developed include claddings comprising a polyalkylphenyl siloxane, where the alkyl portion of the siloxane contains no more than 10 carbon atoms, and preferably is a methyl group. The phenyl content is preferably at least 15% by weight; as the phenyl content of a polymethylphenyl siloxane increases, the refractive index of the siloxane increases. Table 1

presents the refractive index of polymethylphenyl siloxanes as a function of their phenyl content. The percent by weight phenyl is based upon the total weight of the siloxane. Also presented in Table 1 is the blackout temperature of a waveguide comprising a silica core and a polymethylphenyl siloxane cladding having the specified phenyl content. All phenyl contents referred to herein are determined by ultraviolet spectroscopy.

TABLE 1

| % by Weight Ph | Refractive Index | Blackout Temp(°C) |
|---|---|---|
| 16.25 | 1.446 | 0°C |
| 17.00 | 1.448 | 5°C |
| 18.25 | 1.451 | 10°C |
| 19.00 | 1.453 | 15°C |

Cladding materials of different phenyl content can be prepared by blending methylphenyl siloxanes with different phenyl contents. However, in practice, it is found that blends which differ widely in phenyl content tend to be milky to opaque. Therefore, when blending methylphenyl siloxanes, preferably the siloxanes differ in refractive index by no more than about 0.02 and the viscosities of both siloxanes are in the range of from about 500 to about 10,000 cps as measured at 25°C.

It is also possible to cross-link methylphenyl siloxanes of different phenyl content. For example, by blending a methylphenyl siloxane having a viscosity of 2,000 cps and a phenyl content of 21% and having a terminal vinyl content of

1 mole % with a second methylphenyl siloxane having a viscosity of 2,000 cps and a phenyl content of 16%, a cladding is produced which in combination with a silica core, provides any blackout temperature required in the range of 0 to 15°C.

A polyalkylphenyl siloxane of the desired phenyl content can be prepared according to conventional polymerization techniques, where the starting materials include dialkyl chlorosilane, diphenyl chlorosilane, and alkylphenyl chlorosilane. In preparing the polyalkylphenyl siloxane, the alkyl groups can be the same or different.

Another novel waveguide has a cladding made of a material that crystallizes as its temperature is lowered. Fig. 4 presents the attenuation vs. temperature curve for a waveguide having a silica core of 200 microns, a first cladding of KE 103 having a thickness of 30 to 35 microns, and an outer cladding layer of Sylgard 184 having a thickness of 60 microns KE 103 is a low molecular weight polydimethyl siloxane available from Shin-Etsu of Japan that crystallizes as its temperature is lowered. The outer layer of Sylgard is required because the KE 103 has poor mechanical properties. As shown by Fig. 4, the waveguide exhibits a large and sudden increase in attenuation at about -56°C as its temperature is decreased, and also exhibits a large and sudden decrease in attenuation at about -40°C as its temperature is increased, showing a hysteresis effect. This large and sudden change in attenuation occurs because KE 103 is a linear, low molecular weight material and is able to crystallize. It has a differential scanning calorimeter melting point of -45°C when warmed from -120°C at 5°C per minute.

Thus sudden and large changes in attenuation result from the KE 103 and are caused by the material changing from a crystalline to an amorphous material at its melting point, and by the material changing from an amorphous material to a crystalline material at its freezing point.

At its crystallization temperature, a large increase in the refractive index of KE 103 occurs so that its refractive index is no longer less than the refractive index of the core. Thus blackout occurs. Also contributing to blackout is light scattering resulting from the crystallization.

To ensure that the crystallization occurs at a specified temperature, it is believed that a nucleating agent such as fumed silica can be used to prevent the freezing point from varying as a result of super cooling of the polymer liquid.

As is evident from Fig. 4, an advantage of using a polymer that crystallizes as a cladding is that the blackout occurs over a very small temperature range. Thus, the waveguide can be used in applications where close control of the temperature of a material is essential.

To be useful in waveguides, a material that exhibits this crystallization phenomenon preferably is sufficiently optically clear to be used as a cladding, and has a refractive index lower than that of silica.

In addition to KE 103, copolymers of dimethylsiloxane and ethylene oxide meet these requirements. The refractive index and crystalline melting point of the copolymer can be altered as required by varying the molar ration of the

siloxane to the ethylene oxide and also by the chain length of the ethylene oxide block. A method for making these copolymers is described in U.S. Reissue Patent No. 25,727 which is incorporated herein by this reference. Preferably the copolymer prepared has a refractive index less than that of silica (about 1.46 at 23°C) so that it can be used as a cladding for silica cores. Particularly suitable polyethylene oxide dimethylsiloxane copolymers for water freeze protection are those whose preparation is described in Examples 1 and 2 of the 25,727 patent. These copolymers have a freezing point of 1°C and refractive indices of 1.4595 and 1.4555, respectively. These copolymers can be protected from absorbing moisture by a water resistant exterior cladding.

Crosslinked polydialkyl siloxanes such as polydiethyl siloxane also exhibit this crystalline melting point phenomenon. Polyalkly diloxanes for use as a cladding comprise the repeating unit:

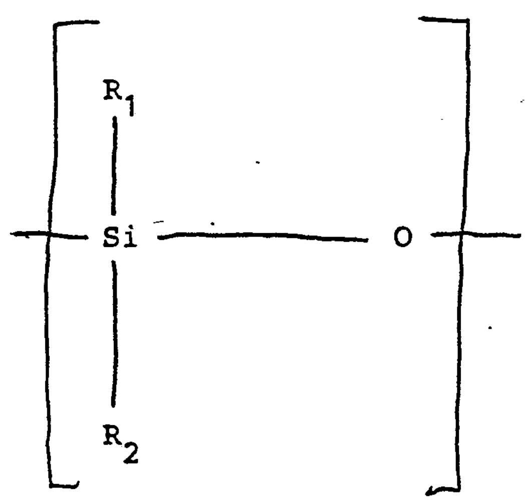

where each $R_1$ is independently selected from the group consisting of methyl, ethyl, and propyl groups; and where each $R_2$ is independently an alkyl group, and preferably a linear alkyl group, of at least 10 carbon atoms, and preferably no more than about 20 carbon atoms.

All the $R_1$'s and $R_2$'s can be the same or different. For example, the polydialkyl siloxane can be a homopolymer of polymethyldodecyl siloxane. Alternatively, it can be a copolymer of 30% by weight of polymethyldodecyl siloxane and 70% by weight polymethyltetradecyl siloxane, which has a crystalline melting point of 3°C. In order to lower the refractive index of the polydialkyl siloxane, a portion of the side chains can be substituted by fluorine substituted groups such as tri-fluoropropyl.

These materials crystallize due to the presence of the long chain alkyl side groups. For example, polymethylhexadecylsiloxane has a melting point of 42°C, a refractive index of 1.4524 (44°C), and a freezing point of 27°C. Preferred materials are cross-linked polymethylalkyl siloxanes, i.e. $R_1$ is a methyl group.

The polymethylalkyl siloxanes can be prepared by reacting the alkene corresponding to the alkyl portion of the siloxane with polymethylhydrogen siloxane in the presence of chloroplatinic acid catalyst. From about 80 to about 95% of the hydrogens are reacted, and at least a portion of the remaining free hydrogens are cross-linked with cross-linking agents such as tetravinyl silane in the presence of chloroplatinic acid catalyst. Other polydialkyl siloxanes can be correspondingly prepared using polyethylhydrogen siloxane or polypropylhydrogen siloxane.

The amount of substitution affects the crystalline melting point. For example, polymethyltetradlecyl siloxane, prior to cross-linking, has a crystalline melting point of 7°C when 80% of the hydrogen is substituted with tetradecene, 12°C with 90% substitution, and 14°C with 100% substitution.

Waveguides consisting of a cladding of cross-linked polymethylpentadecyl siloxane on a glass core were prepared. When the glass core used was a silica core, blackout occurred at about 5°C. When the glass core used was made from sodium-borosilicate, blackout occurred at about -1°C.

Preferably a waveguide used in the present invention has a core with a diameter of from about 100 to about 300 microns, and most preferably about 200 microns. With cores of less than 100 microns, it is difficult to couple and connect the waveguide. Furthermore, with a larger core than 100 microns, it is possible to transmit larger amounts of light for longer distances. However, at diameters much greater than 300 microns, the advantages obtained are insufficient to overcome the increased material costs and breakage caused by bending.

Unless indicated otherwise, all refractive indices mentioned herein refer to the refractive index of a material measured at a temperature of 25°C with sodium light 589 nm. However, the waveguides of the present invention are not limited to use with just visible light. They can be used with ultraviolet and infrared light. Thus the term "light" as used herein refers to visible light, ultraviolet light, and infrared light.

The cladding can be applied to the core in situ, where the cladding is cross-linked directly on the core. In applying a cladding to an optical fiber, preferably the fiber is coated before moisture or other contaminants reach the fibre. Also, it is important to avoid scratching or otherwise abrading the fiber because this can drastically reduce the tensile strength of the fiber. With these problems in mind, it is preferred to apply a cladding with a low modulus applicator such s that described by A.C. Hart, Jr., and R.B. Albarino in "An Improved Fabrication Technique For Applying Coatings To Optical Fiber Wave Guides", Optical Fiber Transmission II Proceedings, February 1977. Preferably the cladding material is applied to the fiber core as a liquid.

In some applications it is desirable that the waveguide exhibits substantial change in its light transmission property at two temperatures. For example, when providing freeze protection, it is desirable that the waveguide used exhibits substantial attenuation of transmitted light at a temperature of about 5°C, and then exhibit even more attenuation at about 1°C. The 5°C breakpoint can be used as a signal for turning on a heater, and the 1°C breakpoint can be used as an emergency alarm. A waveguide suitable for such an application is shown in Fig. 5 and its attenuation vs. temperature curve is shown in Fig. 6.

The waveguide of Fig. 5 comprises a core A, a first cladding B disposed on and around the exterior surface of the core, and a second cladding C disposed on and around the exterior surface of the first cladding. The refractive index of the first cladding B is less than the refractive index of the core A at temperatures greater than the first selected temperature $T_1$, and is greater than or equal to the refractive index of the core A at temperatures less than $T_1$.

The refractive index of the second cladding C is less than the refractive index of the first cladding B at temperatures greater than the second selected temperature $T_2$ and is greater than or equal to the refractive index of the first cladding B at termperatures less than $T_2$. $T_1$ is greater than $T_2$.

A waveguide of this construction has the attenuation vs. temperature curve as shown in Fig. 6. What occurs is that as the temperature of the waveguide is reduced to $T_1$, which corresponds to about 10°C in Fig. 6, the refractive index of the first cladding becomes equal to the refractive index of the core. Thus, a portion of the transmitted light is absorbed by the cladding and the attenuation is increased. As the temperature of the waveguide is further decreased, the refractive index of the second cladding becomes equal to the refractive index of the core at $T_2$, which corresponds to about 0°C in Fig. 6. At this point, blackout occurs.

To be readily detectable, preferably the level of attenuation that occurs at temperatures less than $T_1$ is at least 3 db greater than the level of attenuation at temperatures greater than $T_1$. Also, preferably the level of attenuation that occurs at temperatures greater than $T_2$ is at least about 3 db greater than the level of atteenuation at temperatures between $T_1$ and $T_2$. The amount of attenuation that occurs at temperatures less than $T_1$ can be controlled by varying the thickness of the first cladding. The smaller the thickness, the less attenuation that occurs. Preferably the first cladding layer is thinner than the second cladding layer, and generally is on the order of about 5 microns thick vs. about 20 microns thick for the second cladding layer.

An example of a waveguide that exhibits this two-step change in attenuation is one consisting of a silica core, a first cladding layer of cross-linked polymethylphenyl siloxane, and a second cladding of polydimethyl siloxane. For such a cladding $T_1$ is 14°C, and $T_2$ is -52°C.

In some applications it is desirable that a single waveguide exhibit blackout at both ends of a selected temperature range of $T_3$ to $T_4$. The attenuation vs. temperature curve of such a waveguide is shown in Fig. 7, where light is transmitted without substantial attenuation between about 10°C to about 80°C, but at about 10°C and 80°C, blackout occurs. A waveguide with this performance characteristic can haved the construction shown in Fig. 5, where it comprises core A of high loss material, a light transmissive layer B disposed on and around the exterior surface of the core, and an exterior cladding C disposed on and around the exterior surface of the light transmissive layer B. The core A is a poorer transmitter of light at temperatures lower than or equal to $T_3$ than is the light transmissive layer. The refractive index of the light transmissive layer B is greater than the refractive indices of both the core A and the exterior cladding C only at temperatures within the selected temperature range of $T_3$ to $T_4$, $T_3$ being less than $T_4$.

At temperatures less than $T_3$, the refractive index of the core A is greater than or equal to the refractgive index of the light transmissive layer B, so that light is no longer contained by the core A in the light transmissive layer B because the core A is made of a high loss material, light passing into the core is absorbed and blackout occurring. At temperatures greater than $T_4$, the refractive index of

the exterior cladding C is greater than or equal to the refractive index of the light transmissive layer B. Because C is a less light transmissive material than B, there is an increase in attenuation at temperatures greater than $T_4$.

The change in refractive index vs. temperature for the components of a waveguide constructed in accordance with this version of the invention is shown in Fig. 8. These refractive index curves correspond to the attenuation curve shown in Fig. 7. As shown in Fig. 8, the refractive index of the core A is less than the refractive index of the light transmissive layer B at temperatures greater than about 10°C($T_3$). At temperatures greater than about 80°C($T_4$), the refractive index of the exterior cladding C is greater than the refractive index of the light transmissive layer B.

A waveguide having the attenuation vs. temperature curve shown in Fig. 7 can comprise a core A made of polymethyltetradecyl siloxane, a light transmissive layer B of polymethylphenyl siloxane of 35% by weight pehnyl content, and an outer cladding C of silica coated with polymethylphenyl siloxane of more than 50% by weight phenyl content, and containing 5% by weight of carbon black.

Another waveguide having the attenuation vs. temperature curve of Fig. 7 can be prepared where the refractive index of the core A is greater than or equal to the refractive index of the light transmissive layer B at temperatures greater than or equal to $T_4$, and the refractive index of the exterior cladding C is greater than or equal to the refractive index of the light transmissive layer B at

temperatures less than or equal to $T_3$. The core is a poorer light transmitter at temperatures greater than or equal to $T_4$ than is the light transmissive layer B.

As described above, in some applications, it is desirable that once a waveguide undergoes a substantial change in its light transmission properties, that change be permanent and irreversible. An example of such a waveguide is one having a polyvinylidene fluoride core (available under the trade name Kynar from Pennwalt) or polymethylmethacrylate core, and a cladding of polydimethyl siloxane. The core is loaded with about 1% by weight of an antioxidant such as 2, 6 di-teriary butyl para-cresol. When the loaded core is irradiated with gamma rays to 5 Mrads, it becomes coloured due to colour centres forming from the antioxidant. Thus, due to the coloring, the amount of light transmission is substantially reduced. However, when the temperature of the core is raised up to about its melting point, the color centers are permanently eliminated. Thus, once a waveguide with the core having color centers is heated up to about the melting point of the core, the waveguide is permanently changed to one that can transmit light.

As noted above, only a portion of a waveguide needs to exhibit blackout as a result of a temperature change. Thus a waveguide can have portions which exhibit blackout at a selected temperature or within a selected temperature range, where the portions are separated by a portion that does not exhibit blackout at the selected temperature or within the selected temperature range. This is particularly useful when the sensing element exhibits relatively poor transmission properties even when it is operating in its mode of transmitting light.

In addition, a single waveguide can include a plurality (two or more) sensing elements which exhibit blackout at different temperatures. For example, one sensing element can be activated at about 0°C as cooled and another sensing element can be activated at about 100°C as heated. With such a waveguide, light can be transmitted only from about 0 to about 100°C. Such a waveguide can be used as part of a system for keeping water liquid.

A waveguide 30 comprising of plurality of sensing elements 32A, 32B, and 32C separated from each other by light transmitting elements 42A, 42B, and 42C is shown in Fig. 13. Each sensing element comprises a core 34A, 34B, and 34C, respectively, and cladding 36A, 36B, and 36C, respectively, disposed on and around the exterior surface of the core. Each sensing element 32 exhibits blackout at a temperature at which the light transmitting elements 42 transmit light. Each light transmitting element 42A, 42B, and 42C comprises a core 44A, 44B, and 44C, respectively, and a cladding 46A, 46B, and 46C, respectively, disposed on and around the exterior surface of the core.

The sensing elements can have the same blackout temperature, or can have different blackout temperatures. Although the sensing elements shown in Fig. 13 are separated by light transmitting elements, sensing elements having different blackout temperatures can be adjoining.

All the sensing elements can have the same core material or have different core materials. All the sensing elements can have the same cladding or different claddings. Likewise, the light transmitting elements can all have the same core

or different cores and can all have the same cladding or different claddings. Furthermore, the cores of the light transmitting elements and the sensing elements can be the same or different. Likewise the claddings of the sensing elements and the light transmitting elements can be the same or different. However it is necessary that at least the cladding or the core of the light transmitting elements and the sensing elements be different so that the sensing elements exhibit blackout at a temperature at which the light transmitting elements transmit light.

In many applications, the light transmitting elements are substantially longer than the sensing elements. Each sensing element can be in the order of one to two centimeters long, while the light transmitting elements can be as long as a kilometer. For example, when the waveguide 30 of Fig. 13 is used for freeze protection along a pipeline, the sensing elements 32 can be spaced every 50 feet apart, where the waveguide 30 has a total length of about a kilometer.

Exemplary of a waveguide comprising sensing elements 32 and light transmitting elements 42 is one having a cellulose ester core (i.e. Celliodr CPHH made by Bayer A.G. anf having a refractive index of 1.470) the light transmitting element 42 having a cladding 46 of polydimethyl siloxane, and the sensing element 32 having a cladding 46 of silica with an exterior absorptive layer of methylpeheyl siloxane of 1.5 refractive index and containing 5% by weight of carbon black. The light transmitting elements transmit light at all temperatures in excess of -52°C. The sensing elements exhibit blackout at an elevated temperature of about 80°C.

Exemplary of another waveguide comprising sensing elements 32 and light transmitting elements 42 is one having a Kynar copolymer cladding (copolymer of vinylidene fluoride and tetrafluoroethylene made by Pennwalt), a sensing element core 34 of polymethylphenylsiloxane, containing 7% phenyl by weight, and a light transmitting element core 44 of silica. The sensing elements blackout at about 90°C. The light transmitting elements transmit light up to temperatures greater than 90°C.

Another waveguide comprising sensing elements 32 and light transmitting elements 42 has a core of cellulose ester (of refractive index 1.47), a light transmitting element cladding 46 of polydimethyl siloxane, a first sensing element cladding 36A of silica with an exterior absorptive layer of polymethylphenyl siloxane of 1.5 refractive index and containing 5% of carbon black by weight and a second sensing element cladding 36B of polymethyltetradecyl siloxxane. The first sensing element 32A exhibits blackout at a temperature of about 80°C, transmitting light at temperatures less than the blackout temperature. The second sensing element 32B exhibits blackout at about 14°C, transmitting light at temperatures in excess of 14°C. The light transmitting elements 42 transmit light at temperatures greater than about -52°C.

A method of making such a waveguide with different temperature responsive sections is to remove a portion of the cladding from the conventional waveguide and replace the removed portion of the cladding with cladding that results in the waveguide having a temperature responsive sensing element. For example, a two centimeter length of the cladding can be removed from a waveguide comprising silica

core and a GE670 cladding (a branched polydimethylsiloxane). The cladding can be removed with wire strippers, followed by removal of any residue with tetramethylguanidine, followed by a rinse with toluene and then isopropanol. The waveguide is maintained in a fixed position so that bare core can be surrounded with uncured cladding which can be cured in position. The cladding can be a methylphenylsiloxane whose refracive index controls the blackout temperature, or a methylakylsiloxane in which the blackout temperature depends on the crystalline melting point of the cladding.

Another method for preparing a waveguide having a short sensing element therein is to dope the cladding of a waveguide at selected locations with a dopant that alters the refractive index of the cladding.

Rather than curing a replacement cladding in situ to replace a cladding that has been stripped from the waveguide, the new cladding can be placed inside a heat-shrinkable sleeve. The heat-shrinkable sleeve can be placed in position over an area of the waveguide where the cladding has been removed and then heated, thereby shrinking the sleeve. The coating on the inside of the sleeve can then provide a cladding - having refractive index properties that provide the waveguide with a useful sensing element.

Another method for producing a single waveguide having one or more sensing elements along its length, where the sensing elements can exhibit a substantial change in light transmission properties at different temperatures, is to pass the core through two applicators which are in tandem. By using a starve-feed system to each of the applicators, different claddings having different refractive index characteristics can be applied to different lengths of the core.

The following examples present waveguides useful in the present invention.

Example 1

The Examnple shows how a waveguide having a blackout temperature of about 0°C for use in freeze protection can be prepared.

A nine meter length of waveguide comprising a 200 micron fused silica core and a cladding of about 30 microns thick of polydimethylsiloxane available under the trade name GE670 was prepared. A two centimeter length of the cladding was mechanically stripped. Any residue present was removed with tetramethylguanidien and rinsed with toluene and isopropanol. The waveguide was held in a fixed position and the uncoated fiber was surrounded with a methylphenylsiloxane solution. The solution consisted of 21.84% of a methylphenylsiloxane containing 15.5% phenyl by weight, 58.16% of a methylphenylsiloxane containing 20.5% phenyl by weight, and 20% of a methylphenylsiloxane containing 7% phenyl by weight. The refractive index of the solution before curing was 1.4466 and after curing in situ in the presence of a chloroplatinaic acid catgalyst, the refractive index was 1.4498. The thickness of the new cladding was about 1/4 inch. The attenuation vs. temperature curve for the waveguide is presented in Fig. 9.

Example 2

Using the same waveguide originally used for Example 1, a two centimeter length of the polydimethylsiloxane cladding was replaced with a siloxane composition containing 43% by weight pehnyl and having a refractive index of 1.513 before curing. The waveguide did not transmit light at room temperature. However, as shown in Fig. 10, at temperatures above 160°C, the waveguide did transmit light.

Example 3

This example demonstrates preparation of a waveguide that cannot transmit light at ambient temperature, but when raised to an elevated temperature, irreversibly changes so that it can transmit light, even after its temperature is reduced to ambient temperature.

A waveguide was prepared having a core of polymethylmethacrylate having a diameter of 0.013 inch. The cladding was polydimethylsiloxane having a thickness of about 50 microns. A second waveguide was prepared, differing from the first waveguide in that it contained 1% by weight of Irganox 1010, an antioxidant available form Ciba Geigy. When light from a helium neon laser was directed through each of the waveguides, the first waveguide transmitted light along the length of 22 inches and the second waveguide transmitted light satisfactorily along a length of 28 inches as detected visually by the experimentor.

Both fibers were irradiated with a high energy electron beam of 10 Mrads. The first fiber still allowed light to transmit an amount of 60% of the previous length. However, the

second fiber would not allow any light to be transmitted. The second fiber was heated to 80°C for two hours and was then able to transmit light in an amnount of 50% of its original transmission properties, even after its temperature was reduced to ambient temperature.

A wide variety of applications are available for using the waveguides described above. For example, according to the present invention, a material can be maintained within a selected temperature range. This is accomplished by placing at least part of a waveguide in thermal communication with the material so that the temperature of the part of the waveguide is responsive to the temperature of the material. The waveguide is selected so that it exhibits blackout at a temperature at about the top and/or at about the bottom of the selected temperature range. Light is directed at one end of the waveguide and the intensity of light transmitted by the part of the waveguide in thermal communication with the material is monitored. At the onset of a substantial change in the intensity of light transmitted by said part of the waveguide, the temperature of the material is adjusted so that it is within the selected range.

Such a temperature control system can be used for many applications. For example, it can be used for over-temperature protection or for under-temperature protection of motors. In over-temperature protection, when the temperature of the motor is higher than a selected temperature, the motor is automatically shut off. In such an application, the temperature range that is desired is all temperatures less than the temperature at which the motor is to be shut off. Under-temperature protection can be used to prevent a

motor from being started up if the temperature is too cool for the oil to properly lubricate the motor. In such an application, the temperature range desired is all temperatures greater than a selected temperature.

Such a system can also be used for over temperature protection in aircraft, motor vehicles, process equipment, and the like. It can be used in automobiles for anti-freeze protection with an alarm system in case any part of a car radiator system is below a pre-determined temperature. It can be used in dams and water systems to determine when freezing is taking place. It can be used as part of a waterbed heater control system by using a waveguide having a blackout temperature of about 90°F. It can be used during charging of batteries to prevent over heating of the battery or to prevent charing of the battery when it is too cold for safe charging.

For example, a temperature control system can be provided for a nickel cadmium battery because such batteries can explode if charged at temperatures less than about 0°C.

For many applications, it is desirable to use a waveguide with a blackout temperature of at least -20°C because there are only limited applications at temperatures lower than -20°C. For example, a waveguide that has a blackout temperature of -20°C can be used for detecting leaks of liquefied natural gas. Also, freeze protection of aqueous solutions requires a waveguide with a blackout temperature at a temperature higher than -20°C.

This concept can better be understood with reference to Fig. 11. In Fig. 11 it is assumed that it is desired to keep a material within a temperature range $T_1$ to $T_2$. To keep the material at a temperature no higher than $T_2$, waveguide A or waveguide B can be used, where both of these waveguides have a blackout temperature at about $T_2$. Waveguide A transmits light without substantial attenuation at temperatures greater than $T_2$, and waveguide B transmits light without substantial attenuation at temperatures less than $T_2$. When waveguide A is used, if the monitor used detects a substantial increase in the intensity of light transmitted, this indicates that the material is heating to a temperature greater than $T_2$, and it is necessary to cool the material. When waveguide B is used, if the monitor detects a substantial decrease in the light transmitted this indicates that the material is heating to a temperature greater than $T_2$, and it is necessary to cool the material.

To maintain the material at a temperature higher than $T_1$, waveguide C or waveguide D can be used, both of which have a blackout temperature at about $T_1$. Waveguide C tansmits light without substantial attenuation at temperatures less than $T_1$ and waveguide D transmits light at temperatures greater than $T_1$. When waveguide C is used if the monitor determines that there is a substantial increase in the light transmitted, this indicates that the material is cooling to a temperature less than $T_1$, and it is necessary to heat the material. When waveguide D is used, if the monitor detects a substantial decrease in the light being transmitted, this indicates that the temperature of the material cooling to a temperature less than $T_1$, and it is necessary to heat the material.

By the terms "at about the top of the selected temperature range" and "at about the bottom of the selected temperature range", there are meant temperatures which provide sufficient time to adjust the temperature of the material to maintain it within the desired temperature range. For example, when keeping waterr from freezing, a waveguide with a blackout temperature of about 5°C can be used.

This technique could be used for preventing materials from changing phase, such as preventing water from freezing or boiling, or preventing a solid from melting or sublimating, or preventing a gas from condensing. For example, to prevent water from freezing, a waveguide can be placed in thermal communication with the water, where the waveguide exhibits blackout at a temperature slightly above the freezing temperature of water.

By "slightly above" there is meant a temperature which provides sufficient time to heat the water to prevent it from freezing. For example, a waveguide that transmits light at temperatures above about 5°C, and has a blackout temperature at about 5°C is suitable. Light is directed at one end of the waveguide and the intensity of light transmitted by the waveguide is monitored. At the onset of a substantial change in the intensity of the light transmitted by the waveguide, the water is heated to prevent if from freezing.

According to the present invention, waveguide temperature sensing systems can be used for preventing the viscosity of a liquid from changing beyond a selected value. For example, when pumping petroleum products in a pipeline, or pumping petroleum from a well, it is important to maintain the

petroleum at a sufficiently high temperature that it can easily be pumped. For this purpose, conduits such as pipelines in cold environments are provided with a heating element, such as steam tracing, electrical resistant heaters, or strip heaters comprising a conductive polymer. According to the present invention, a waveguide that exhibits blackout at a temperature corresponding to the temperature at which the viscosity of the liquid increases above a selected value is placed in thermal communication with the liquid. This can be effected by placing the waveguide longitudinally or spirally within the pipeline. The advantage of using fiber optic systems is that even if a waveguide breaks, there is no danger of an explosion and no fire hazard associated with the waveguide. This is unlike an electrical powered temperature sensing system. Light is directed at one end of the waveguide and the intensity of light transmitted by the waveguide is monitored. At the onset of substantial change in the intensity of light transmitted, the liquid is heated to lower its viscosity.

The present invention can also be used for detecting leaks of fluids out of a container. In general, the waveguide can be used for detecting leakage of a fluid from a container where the fluid is at a temperature other than ambient temperature, i.e. lower than ambient temperature or higher than ambient temperature. For example, a wveguide having the attenuation vs. temperature curve of the GE 655 clad waveguide shown in Fig. 2 can be placed adjacent a container of liquid nitrogen or liquified natural gas. Light can be directed at one end of the waveguide and the other end of the waveguide can be monitored. The presence of blackout indicates that leakage of the liquid nitrogen or LNG is occurring.

In some applications, it is possible to detect leakage of a fluid that is at ambient temperature. In such an application, the waveguide is maintained at a temperature other than ambient temperature by a cooling or heating jacket or the like. Upon leakage of the fluid, the temperature of the jacket and waveguide changes towards ambient temperature. The waveguide can be selected so that as its temperature approaches ambient temperature, its light transmission properties undergo a substantial

Use of waveguides is not limited to detecting leakage of a fluid from a container; they can also be used as part of monitoring systems in pipelines and the like to determine where the fluid is flowing. For example, for having a plurality of valves, a waveguide can be provided in the downstream side of each valve, so that when the valve is opened, a signal is generated indicating that fluid is passing through the valve.

Another application for waveguides of the present invention is for detecting the level of a fluid (i.e., liquid or gas) in a container, the fluid having a temperature different from ambient temperature. This is effectged by selecting a waveguide, at least a portion of which exhibits blackout when the temperature of said portion is changed from ambient temperature to the temperature of the fluid, or a waveguide that begins to transmit light as the temperature of said portion is changed from ambient temperature to the temperature of the fluid. The said portion of the waveguide is placed into the container, light directed at one end of the waveguide, and the intensity of light transmitted by the portion is monitored. The onset of substantial change in

the intensity of light transmitted by that portion indicates that the portion is in thermal communication with the fluid. Fluids can be measured in tanks, cargo holds, deep wells, and the like.

Fig. 12 shows an article 10 that makes use of the present invention. The article comprises an outer tubular sleeve 12, which can be made of a heat-recoverable material heat activatable insert 16, and a waveguide 17 that has a blackout temperature at about the activation temperature of the heat-activatable insert 16. A common problem in using such articles is that the craftsmen in the field can be uncertain as to whether the entire heat-activatable material has been activated. This can be a serious problem when the heat -activatable material is a meltable material such as solder or an adhesive such as a heat-activatable adhesive or mastic which requires heat to perform its bonding and sealing functions. In applying the article 10, the craftsman should heat the entire article so that the entire heat-activatable insert is activated. However, because the insert is within the sleeve 12, a craftsman is unable to determine whether or not this occurs. However, with the article of Fig. 12, this problem is remedied.

The waveguide 17 is one that undergoes a change in its light transmission characteristics once it reaches a temperature at which the heat-recoverable material has recovered and the insert has been activated. Preferably the change is permanent and irreversible because with long articles 10, after one end of it has been heated to a desired temperature, that end can cool down to below the required temperature while the remainder of the article 10 is being heated. If a waveguide that did not undergo a permanent change were used, an operator might needlessly reheat the first end.

The heat-activatable material can be fused material such as solder or polymeric material, an adhesive that requires heat for activation, and the like. The sleeve 12 can be made of a heat-recoverable or a heat-expandable material. It can be a polymeric material made from metal or other materials. Furthermore, it need not be heat recoverable at all, but only serve to hold a heat-activatable material in location until the activatable material has been activated, and then the sleeve is ready for removal. The sleeve need not be continuous in cross-section, but can have a slot along its length. Likewise, the sleeve need not be circular in cros-section, but can have different shapes. Exemplarly of articles for which the present invention can be used are those described in U.S. Patent Nos. 3,243,211; 3,297,819; 3,305,625; 3,312,772; 3,324,230; 3,382,121; 3,415,287; 3,525,799; 3,539,411; 3,770,556; 3,847,721; 3,852,517; 3,946,143; 3,957,382; 3,988,399; 3,990,661; 3,995,964; 4,016,356, 4,045,604; 4,092,193, 4,126,759 and 4,179,320, all of which are incorporated herein by this reference.

Although the present invention has been described in considerable detail with reference to certain versions thereof, other versions are possible. For example, waveguides can be used on the leading edge of airplanes to detect icing. They can be used in cable trays in nuclear power plants to check for overheating. Therefore the spirit and scope of the appended claims should not necessarily be limited to the description of the preferred versions contained herein.

An additional application is that the waveguides of the present invention can also be used for detecting fires. This is effected by placing at least part of a waveguide in a position proximate to a combustible material so that the

temperature of the waveguide is higher than ambient temperature when the combustible material is on fire. The waveguide is chosen so that its light transmission properties exhibit a substantial change when the temperature of the waveguide is higher than ambient temperature, i.e. either the waveguide changes from a blackout condition to a light transmitting condition or the waveguide changes from a light transmitting condition to a blackout conditgion. Light is directed at one end of the waveguide, and the intensity of the light transmitted by the waveguide is monitored. At the onset of the substantial change, an alarm can be activated and/or a sprinkler system can be activated.

CLAIMS:

1. A method of controlling the temperature of a material comprising the steps of:

(a) placing at least part of a waveguide in thermal communication with the material so that the temperature of the waveguide is responsive to the temperature of the material, the waveguide comprising a core and a cladding disposed on and around the exterior surface of the core, the said part of the waveguide undergoing blackout at a pre-selected temperature,

(b) directing light into the waveguide,

(c) monitoring the intensity of the light transmitted along the waveguide so as to detect a substantial change in the said intensity when the temperature of the waveguide approaches the blackout temperature, and,

(d) when the said substantial change occurs, heating or cooling the material to maintain its temperature above or below a pre-selected limit.

2. A method according to claim 1, wherein the material is a liquid in a conduit, the viscosity of the liquid increasing as its temperature decreases, the core and cladding of the waveguide are selected so that the waveguide undergoes blackout either when the viscosity of the liquid is above, or when the viscosity of the liquid is below,a selected value and correspondingly transmits light either when the viscosity of the liquid is below, or when the viscosity of the liquid is above, the selected value, and when the said substantial change in intensity occurs, the liquid is heated to lower its viscosity.

3. A method according to claim 2, wherein said part of the waveguide is on the exterior of the conduit.

4.. A method according to claim 2, wherein said part of the waveguide is within the conduit and in direct contact with the liquid.

5. A method according to claim 1 wherein the material is capable of changing from a first phase to a second phase in response to changing temperature, the core and cladding of the waveguide are selected so that the waveguide undergoes blackout at a selected blackout temperature slightly different from the temperature at which the material changes from the first phase to the second phase, and when the said substantial change in intensity occurs the temperature of the material is adjusted to prevent the phase change.

6.- A method according to claim 1, wherein the material is heat activatable, for application to a substrate, the core and cladding of the waveguide are selected so that the waveguide undergoes blackout at a selected temperature no less than the temperature at which the heat-activatable material is activated, and the material is heated in contact with the said substrate at least until the intensity of light transmitted by the waveguide has undergone the said substantial change, thereby effecting application of the material to the substrate.

7. A method according to claim 6 wherein the article is a heat-recoverable article.

8. A method according to claim 6 or 7, wherein when the waveguide is heated to a temperature above the temperature at which the heat-activatable material is activated, the waveguide permanently transmits light.

9. A method of indicating the presence or absence of a material comprising the steps of (a) placing at least part of a waveguide in a position such that it is at a first temperature when the material is present and is at a second temperature when the material is absent, the waveguide comprising a core and cladding disposed on and around the exterior surface of the core, the said part of the waveguide undergoing blackout at a preselected blackout temperature within the range from the said first temperature to the said second temperature, (b) directing light into the waveguide, and (c) monitoring the intensity of light transmitted along the waveguide so as to detect a substantial change in the said intensity when the temperature of the waveguide approaches the blackout temperature.

10. A method according to claim 9 for detecting passage of a fluid out of a container comprising the steps of: (a) placing the said part of a waveguide in a position proximate to the container so that the temperature of the waveguide is at the first temperature when no fluid passes out of the container and is at the second temperature when fluid passes out of the container, the onset of the said substantial change in the intensity of light transmitted along the waveguide indicating that the fluid is passing out of the container.

11. A method according to claim 9 for determining the level of a fluid in a container, the fluid having a temperature different from ambient temperature, wherein the waveguide undergoes blackout at a selected blackout temperature between ambient temperature and the temperature of the fluid, and the onset of a substantial change in the intensity of light transmitted by said portion indicates that said portion is in thermal communication with the fluid.

12. A method according to claim 1, wherein the said material is included in a battery which is unsuitable for charging at certain temperatures, the core and cladding of the waveguide are selected so that the said substantial change in intensity of light transmitted along the waveguide indicates when appropriate charging temperatures are reached, and the battery is charged only when such appropriate temperatures are indicated.

13. Apparatus for performing a method according to any of claims 1 to 8, comprising:

(a) a waveguide, at least part of the waveguide in use being in thermal communication with the said material so that the temperature of the said part of the waveguide is responsive to the temperature of the material, the waveguide comprising a core and cladding disposed on and around the exterior surface of the core, the said part of the waveguide undergoing blackout at a selected blackout temperature;

(b) means for directing light into the waveguide;

(c) means for monitoring the intensity of light transmitted along the waveguide; and (d) means for adjusting the temperature of the material when the means for monitoring detects a substantial change in the intensity of the light transmitted along the waveguide.

14. Apparatus for performing a method according to any of claims 9 to 11 comprising:

(a) a waveguide, at least part of the waveguide in use being in thermal communication with the said material so that the temperature of the said part of the waveguide is responsive to the temperature of the material, the waveguide comprising a core and cladding disposed on and around the exterior surface of the core, the said part of the waveguide undergoing blackout at a selected blackout temperature;

(b) means for directing light into the waveguide;

and (c) means for monitoring the intensity of light transmitted along the waveguide; the waveguide being positioned in or near a container so as to be capable of detecting the level of fluid in the container or the passage of fluid out of the container in the manner specified in any of claims 9 to 11.

15. Apparatus according to claim 14 wherein the said part of the waveguide is in a position proximate to a container so that the temperature of the said part is at a first temperature when no fluid passes out of the container and is at a second temperature when fluid passes out of the container.

16. Apparatus for charging a battery by a method according to any of claims 28 to 31 comprising:

the said waveguide in thermal communication with the battery,

means for directing light into the waveguide,

means for monitoring the intensity of light transmitted along the waveguide, and

means for charging the battery only when the battery is at suitable temperatures as indicated by the intensity of light transmitted along the waveguide.

17. An article comprising a heat-activatable material and a waveguide in thermal communication with the heat-activatable material so that the temperature of the waveguide is responsive to the temperature of the heat-activatable material, the waveguide comprising a core and a cladding disposed on and around the exterior surface of the core, wherein the waveguide exhibits blackout at a selected blackout temperature no less than the temperature at which the heat-activatable material is activated.

18. An article according to claim 17 wherein the article is heat-recoverable, and the waveguide either exhibits blackout at a temperature no less than the temperature at which the heat-recoverable article heat recovers, or transmits light when it is at a temperature above the temperature at which the heat-activatable material is activated.

19. An article according to claim 17 or 18 which is tubular, the heat-activatable material being within the article and being not visible when the article is placed on a substrate, and at least part of the waveguide being within the article.

20. A waveguide comprising two connected sections, a first section and a second section, the first section comprising a first core and a first cladding disposed on an around the exterior surface of the first core, and the second section comprising a second core and a second cladding disposed on and around the exterior surface of the second core, the first section of the waveguide exhibiting blackout at a first selected temperature, at which first selected temperature the second section transmits light.

21. A waveguide according to claim 20 in which the second section of the waveguide exhibits blackout at a second selected temperature, at which second selected temperature the first section transmits light.

22. A waveguide according to claim 20 or 21 including a third section comprising a third core and a third cladding disposed on and around the exterior surface of the third core, the third section of the waveguide exhibiting blackout at a third selected temperature, at which third selected temperature the first and second sections transmit light.

23. A waveguide comprising a plurality of sensing elements separated from each other by light transmitting elements, each sensing element comprising a sensing core and a sensing cladding disposed on and around the exterior surface of the sensing core, and each light transmitting element comprising a transmitting core and a transmitting cladding disposed on and around the exterior surface of the transmitting core, each sensing element exhibiting blackout at a temperature at which the light transmitting elements transmit light.

24. A waveguide according to any of claims 20 to 23 in which any two or more of the said cores are of the same material.

25. A waveguide according to claim 23 or 24 in which at least one sensing element has a different blackout temperature from another sensing element.

26. A waveguide comprising a core and a first section of cladding disposed on and around the exterior surface of the core, and a second section of cladding disposed on and around the exterior surface of the core, the first section and the second section being of different compositions.

27. A waveguide according to claim 26 in which the refractive indices of both sections of cladding are less than the refractive index of the core at all temperatures less than a selected temperature $T_1$, and at temperatures greater than $T_1$ the refractive index of the first section of cladding is greater than the refractive index of the core while the refractive index of the second section of cladding remains less than the refractive index of the core.

28. A waveguide according to claim 26 in which the refractive indices of both sections of cladding are less than the refractive index of the core at all temperatures greater than a selected temperature $T_1$, and at temperatures less than $T_1$, the refractive index of the first section of cladding is greater than the refractive index of the core while the refractive index of the second section of cladding remains less than the refractive index of the core.

29. A method for preparing a waveguide comprising a core and a first section of cladding disposed on and around the exterior surface of the core and a second section of cladding disposed on and around the exterior surface of the core, the first section comprising a first material and the second section comprising a second material, the first and second materials being different, the method comprising the steps of:

(a) preparing a waveguide comprising a core and a first cladding comprising the first material;

(b) removing a section of the first cladding material; and

(c) curing the second cladding in situ on the section of the core with the first cladding removed therefrom.

30. A method for preparing a waveguide comprising a core and a first section of cladding disposed on and around the exterior surface of the core and a second section of cladding disposed on and around the exterior surface of the core, the first section comprising a first material and the second section comprising a second material, the first and second materials being different, the method comprising the steps of:

(a) preparing a waveguide comprising a core and a first cladding comprising the first material;

(b) removing a section of the first cladding materials; and

(c) heat shrinking a heat-recoverable sleeve onto the section of the core with the first cladding removed therefrom, the sleeve having an insert of the second cladding.

31. A method for preparing a waveguide comprising a core and a first section of cladding disposed on and around the exterior surface of the core, the first section comprising a first material and the second section comprising a second material, the first and second material being different, the method comprising the steps of:

(a) preparing a waveguide comprising a core and a first cladding consisting of the first material; and

(b) doping a section of the first cladding material with a dopant that alters the refractive index of the first cladding, thereby forming the second material.

32. A method for detecting fires comprising the steps of:

(a) placing at least part of a waveguide in a position prximate to a combustible material so that the temperature of the waveguide is higher than ambient temperature when the combustible material is on fire, the waveguide comprising a fiber core and a cladding disposed on and around the exterior surface of the core, the waveguide exhibiting blackout when the temperature of said part is higher than ambient temperature;

(b) directing light into the waveguide; and

(c) monitoring the intensity of light transmitted along the waveguide, the onset of a substantial change indicating that the combustible material is on fire.

33. A waveguide comprising a core and cladding disposed on and around the exterior surface of the core, at least a portion of the waveguide exhibiting blackout at a selected blackout temperature greater than about -20°C and less than about 200°C.

34. A waveguide according to claim 33 wherein blackout occurs at about 0°C.

35. A waveguide according to claim 33 wherein blackout occurs at a temperature less than or about 100°C.

36. A waveguide according to claim 33 wherein at least two portions of the waveguide exhibit blackout at a selected blackout temperature greater than about -20°C and less than about 200°C, said portions being separated by a portion that does not exhibit blackout at the selected temperature.

37. A waveguide comprising a core and a cladding disposed on and around the core, the index of refraction of the cladding being greater than or equal to the index of refraction of the core at a selected temperature greater than -20°C, and less than about 200°C, the index of refraction of the cladding being less than the index of refraction of the core at temperatures greater than the selected temperature.

38. A waveguide according to claim 37 wherein the index of refraction of the cladding is equal to the index of refraction of the core at about 0°C, and is less than the index of refraction of the core at temperatures substantially greater than 0°C.

39. A waveguide according to claim 37 wherein the said selected temperature is greater than 0°C.

40. A waveguide comprising a core and cladding disposed thereon, the cladding having a crystalline melting point greater than -20°C, the refractive index of the cladding being less than the refractive index of the core at temperature greater than the crystalline melting point of the cladding and being greater than or equal to the refractive index of the core at temperatures less than or equal to the crystalline melting point.

41. A waveguide according to claim 40 in which the cladding comprises a copolymer of dimethylsiloxane and ethylene oxide.

42. A waveguide according to claim 40 in which the cladding comprises a cross-linked polydialkyl siloxane.

43. A waveguide comprising a core and cladding disposed on and around the exterior surface of the core, the cladding comprising a polyalkylphenyl siloxane.

44. A waveguide according to claim 43 in which the cladding comprises a polymethylphenyl siloxane.

45. A waveguide according to claim 44 in which the phenyl content of the polymethyphenyl siloxane is at least 15% by weight based upon the total weight of the siloxane.

46. A waveguide according to claim 43 in which the cladding comprises a blend of two methylphenyl siloxanes of different phenyl content, the refractive index of the two methylphenyl siloxanes being different by no more than 0.02 and the viscosity of both methylphenyl siloxanes being in the range of 500 to 10,000 cps.

47. A waveguide comprising a fiber core and a cladding disposed on and around the exterior surface of the core, the cladding comprising a cross-linked polydialkyl siloxane comprising the unit:

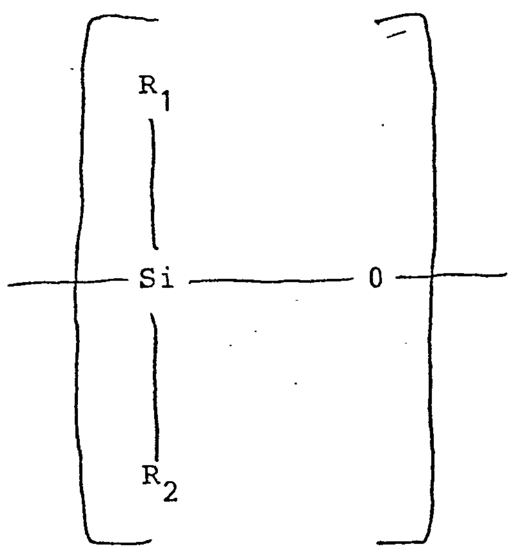

where each $R_1$ in a polymer chain is independently selected from the group consisting of methyl, ethyl, and propyl groups; and

where each $R_2$ in a polymer chain is independently an alkyl group of at least 10 carbon atoms and the $R_1$'s and R2's in a polymer chain can be the same or different.

48. A waveguide according to claim 47 in which each $R_1$ is a methyl group.

49. A waveguide according to claim 47 wherein each $R_2$ is tetradecane.

50. A waveguide according to claim 47 wherein a portion of the $R_2$'s are tetradecane.

51. A waveguide comprising a core, a first light transmissive cladding disposed on and around the exterior surface of the core, and a second cladding disposed on and around the exterior surface of the first cladding, the refractive index of the first cladding being less than the refractive index of the core at temperatures greater than a first selected temperature and being greater than or equal to the refractive index of the core at temperatures less than the first selected temperature, the refractive index of the second cladding being less than the refractive index of the first cladding at temperatures greater than a second selected temperature and greater than or equal to the refractive index of the first cladding at temperatures less than the second selected temperature, the second selected temperature being less than the first selected temperature.

52. A waveguide according to claim 51 wherein the thickness of the first cladding is less than the thickness of the second cladding.

53. A waveguide comprising a core, a first cladding disposed on and around the exterior surface of the core, and a second cladding disposed on and around the exterior surface of the first cladding, the waveguide transmitting light with a first level of attenuation at temperatures less than a first selected temperature, transmitting light with a second level of attenuation at temperatures less than a second selected temperature, the second selected temperature being greater than the first selected temperature, the second level of attenuation being at least about 3 dB greater than the first level of attentuation, and the third level of attenuation being at least about 3 dB greater than the second level of attenuation.

54. A waveguide comprising a core, a first cladding disposed on and around the exterior surface of the core, and a second cladding disposed on and around the exterior surface of the core, and a second cladding disposed on and around the exterior surface of the first cladding, the waveguide transmitting light with a first level of attenuation at temperatures greater than the first selected temperatures greater than a second selected temperature, and transmitting light with a third level of attenuation at temperatures less than the second selected temperature, the second selected temperature being less than the first selected temperature, the second level of attenuation being at least about 3 db greater than the first level of attenuation, and the third level of attenuation being at least about 3 db greater than the second level of attenuation.

55. A waveguide comprising a core of cladding, a light transmissive layer disposed on and around the exterior surface of the core, and an exterior cladding disposed on and around the exterior surface of the light transmissive layer, wherein the refractive index of the light transmissive layer is greater than the refractive indices of both the core and the exterior cladding only at temperatures within a selected temperature range of $T_1$ to $T_2$, $T_1$ being less than $T_2$.

56. A waveguide according to claim 55 in which the refractive index of the core is greater than or equal to the refractive index of the light transmissive layer at temperatures less than or equal to $T_1$.

57. A waveguide according to claim 55 or 56 in which the refractive index of the exterior cladding is greater than or equal to the refractive index of the light transmissive layer at temperatures greater than or equal to $T_2$.

58. A waveguide comprising a core and a cladding disposed on and around the exterior of the core, the waveguide transmitting light at temperatures within a given temperature range, and once the temperature of the waveguide is outside the given temperature range, the waveguide permanently transmitting substantially no light.

59. A waveguide comprising a core and a cladding disposed on and around the exterior surface of the core, the waveguide transmitting substantially no light at temperatures within a selected temperature range and once the temperature of the waveguide is outside the given temperature range, the waveguide permanently transmitting light.

60. A waveguide comprising a core and a cladding disposed on or around the exterior surface of the core, the cladding comprising a polysiloxane doped with a sufficient amount of dopant to raise the refractive index of the polysiloxane cladding, the dopant being selected from the group consisting of 2,2-dimethyldiphenyltrisiloxane; 1, 1,1,5,5,5-hexamethyldiphenyltrisiloxane; hexaphenylcyclotrisiloxane; tetraphenylsilane; diallyldiphenyl silane; and combinations thereof.

61. A waveguide comprising a core and a cladding disposed on or around the exterior surface of the core, the cladding comprising a polysiloxane doped with a sufficient amount of dopant to raise the refractive index of the polysiloxane cladding, the dopant being selected from the group consisting of chlorinated phenylsiloxanes, nitrile containing siloxanes, and combinations thereof.

62. A waveguide according to claim 60 or 61 in which the cladding is irradiated with an electron beam in a sufficient amount to substantially permanently maintain the dopant in the polysiloxane cladding.

63. A waveguide according to claim 47 wherein each $R_2$ is a linear alkyl group.

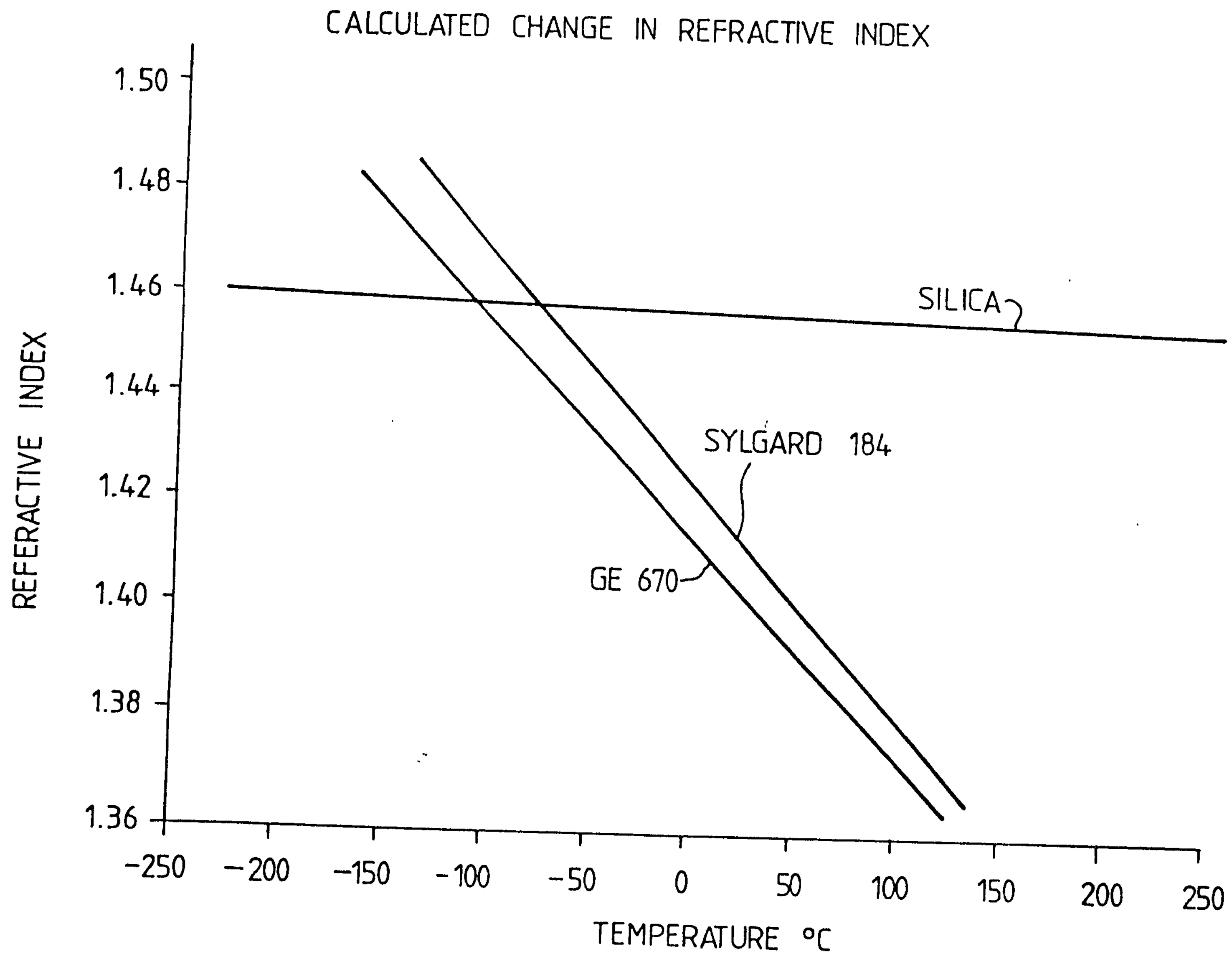
CALCULATED CHANGE IN REFRACTIVE INDEX
REFERACTIVE INDEX
1.50
1.48
1.46
1.44
1.42
1.40
1.38
1.36
−250
−200
−150
−100
−50
0
50
100
150
200
250
TEMPERATURE °C
SILICA
SYLGARD 184
GE 670

Fig.1

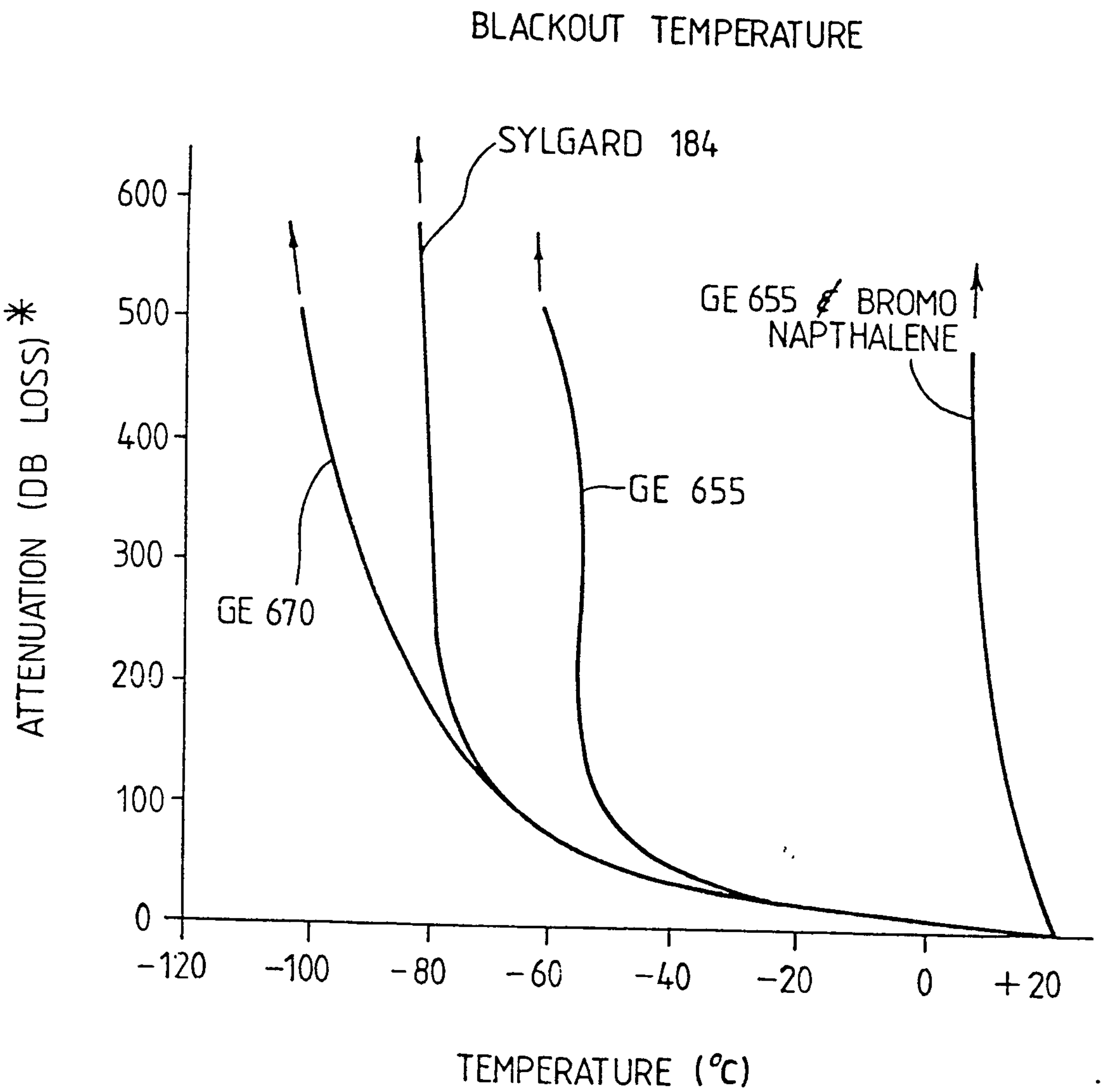


Fig.2

* INCREASE IN ATTENUATION vs ROOM TEMPERATURE ATTENUATION

ATTENUATION vs. TEMPERATURE

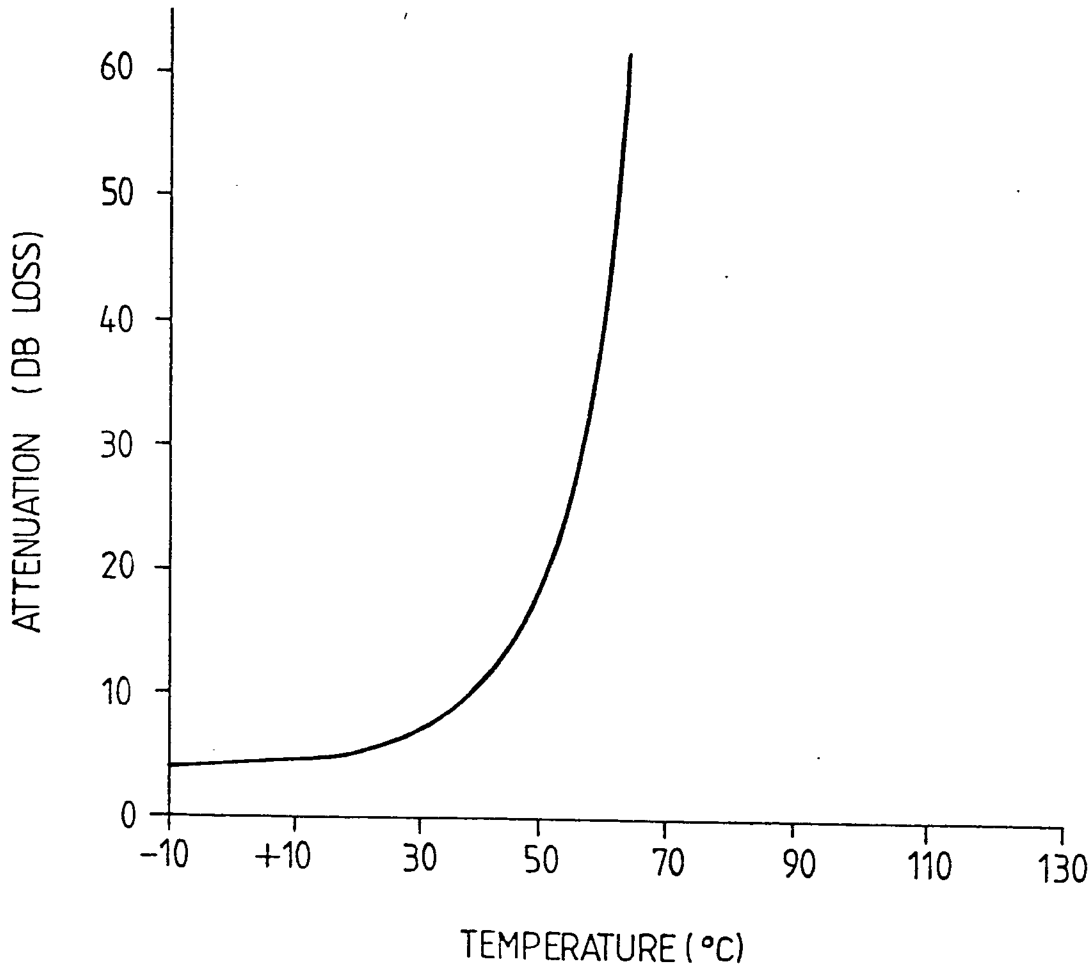


Fig. 3

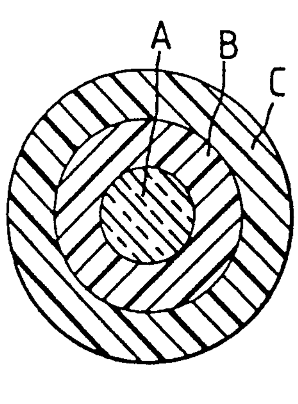


Fig. 5

LOW TEMPERATURE TRANSMISSON CHARACTERISTICS OF FIBER COATED WITH KE 103 AND SYLGARD 184

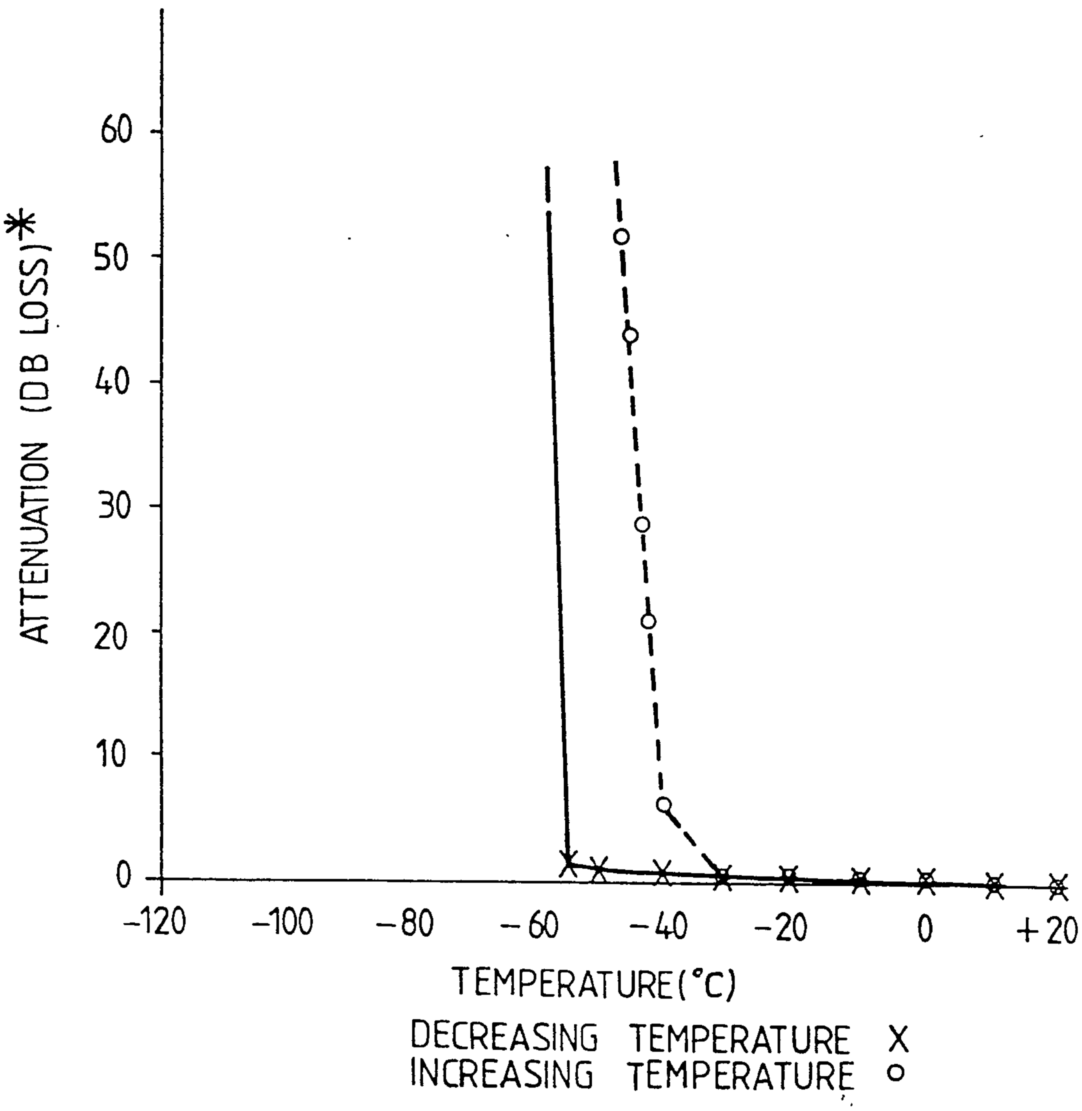


Fig.4

* INCREASE IN ATTENUATION vs ROOM TEMPERATURE ATTENUATION

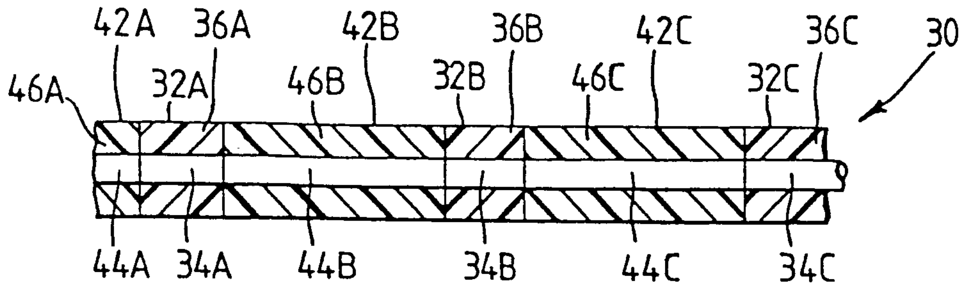


Fig.13

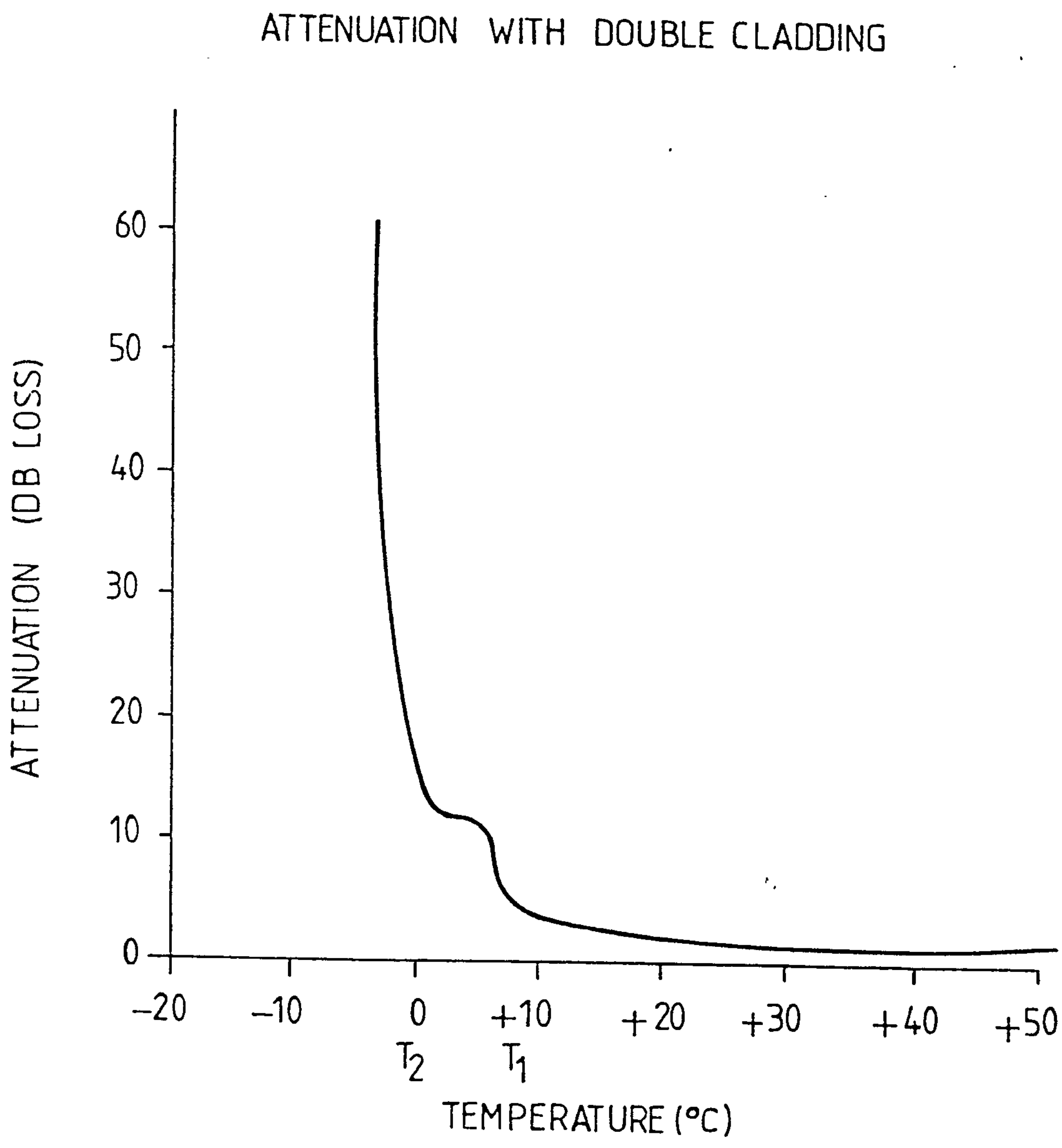
ATTENUATION WITH DOUBLE CLADDING
ATTENUATION (DB LOSS)
60
50
40
30
20
10
0
-20
-10
0
+10
+20
+30
+40
+50
$T_2$
$T_1$
TEMPERATURE (°C)

Fig. 6

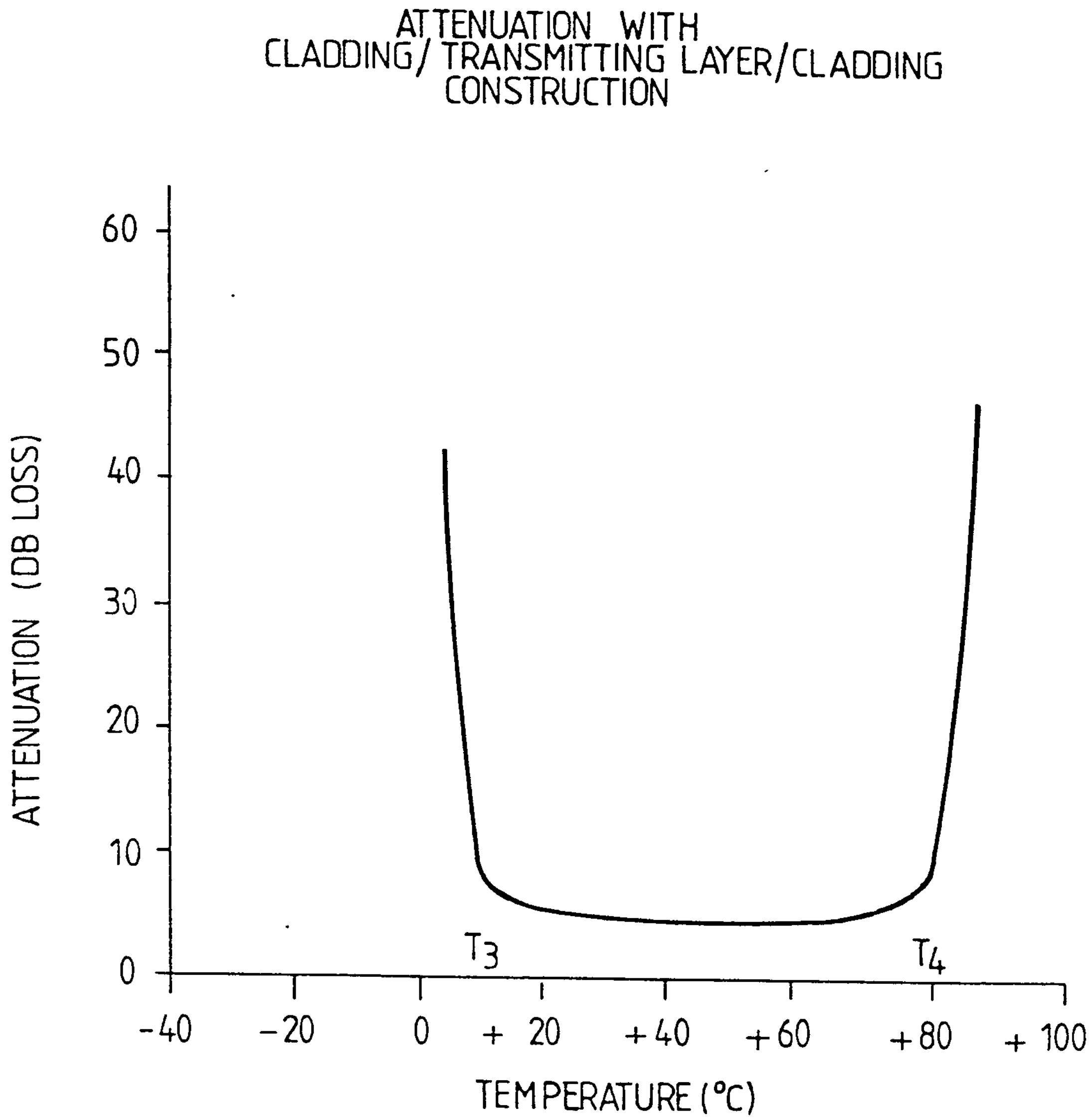
ATTENUATION WITH
CLADDING/ TRANSMITTING LAYER/CLADDING
CONSTRUCTION
ATTENUATION (DB LOSS)
60
50
40
30
20
10
0
T3
T4
-40
-20
0
+ 20
+40
+60
+80
+ 100
TEMPERATURE (°C)

Fig.7

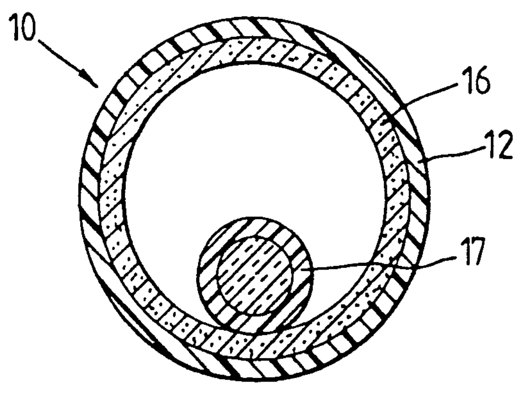
10
16
12
17

Fig.12

CHANGE IN REFRACTION INDEX vs TEMPERATURE FOR A THREE LAYER CONSTRUCTION

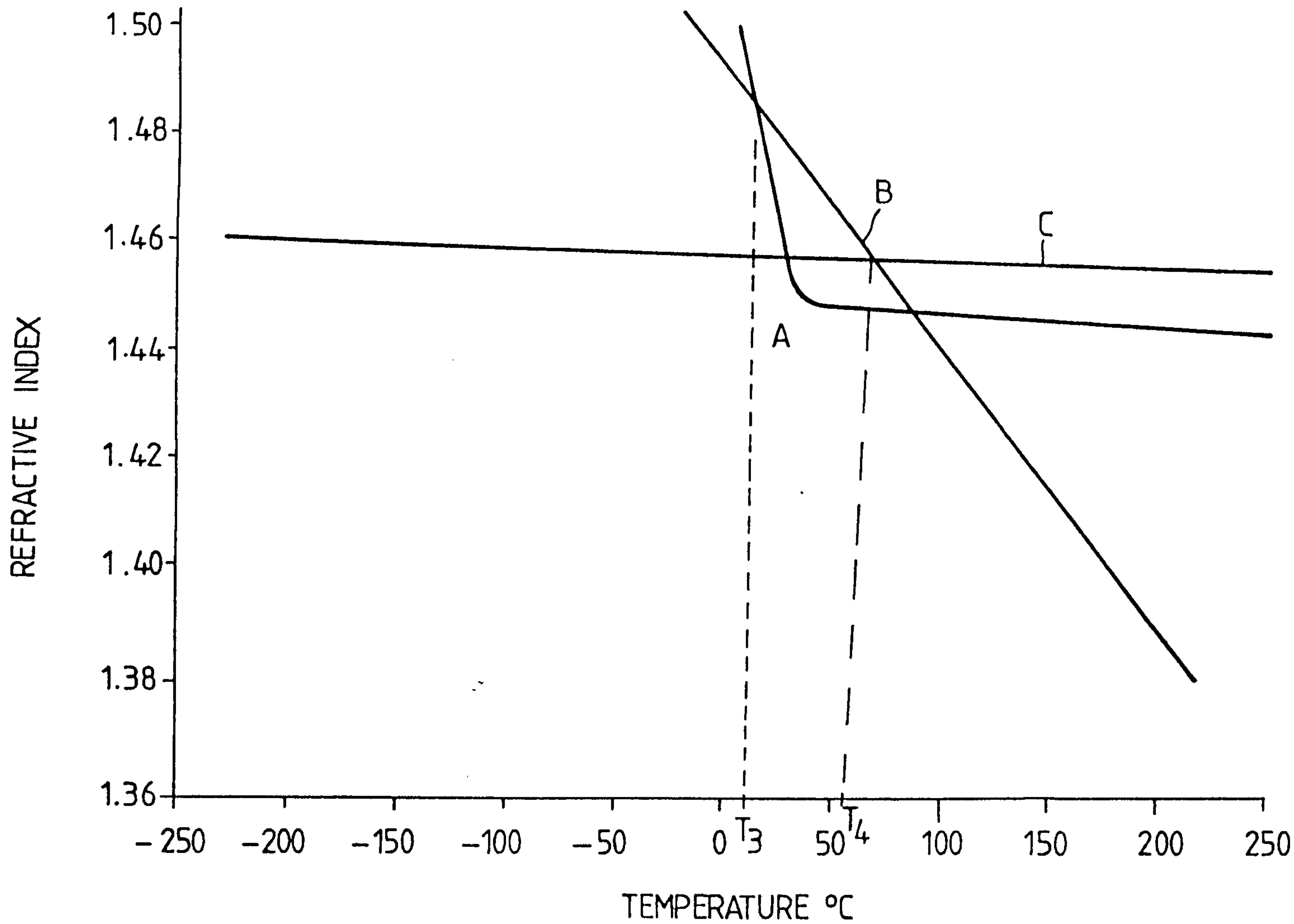


Fig.8

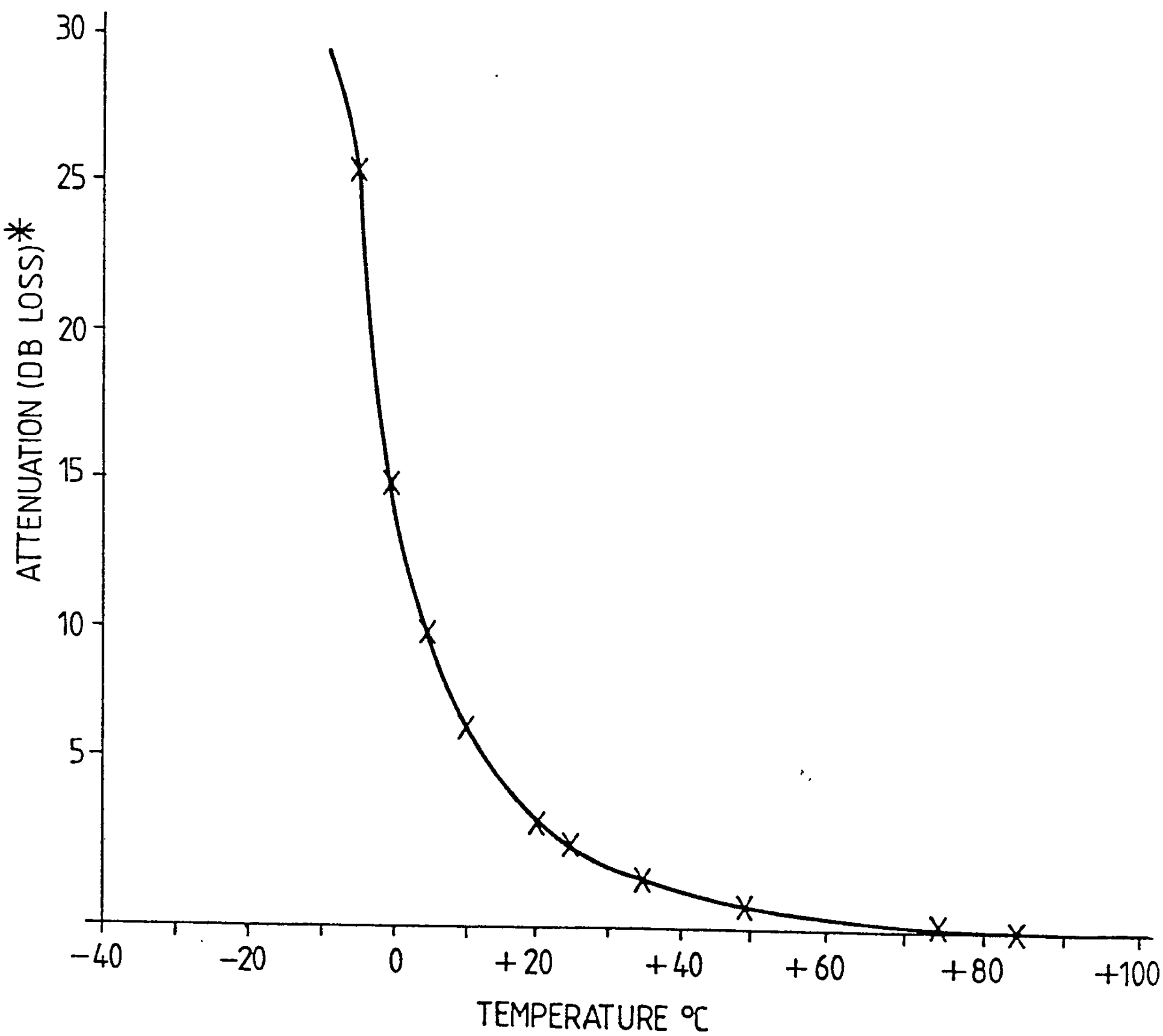


Fig. 9

* INCREASE IN ATTENUATION vs 100°C ATTENUATION

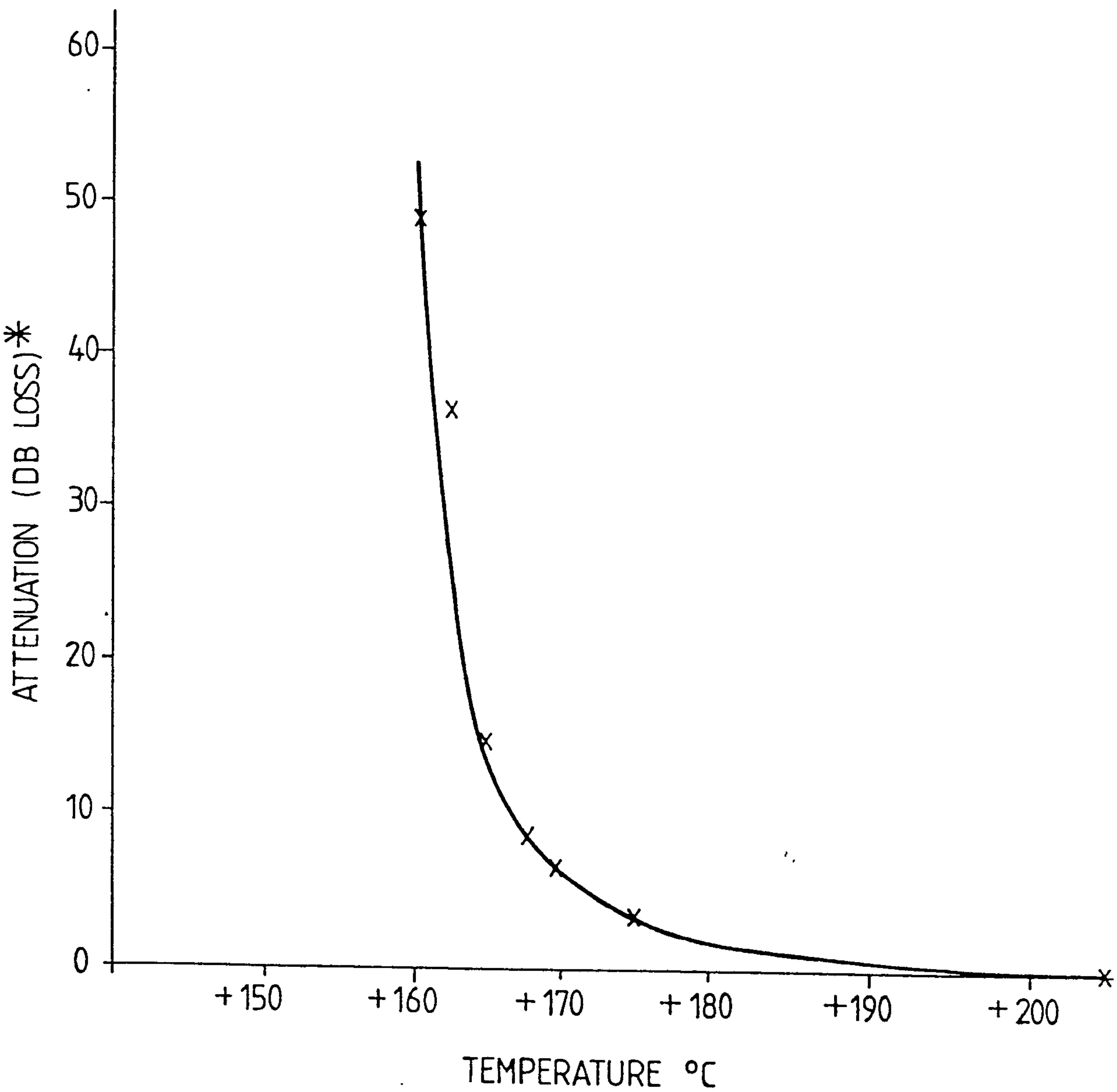


*Fig. 10*

* INCREASE IN ATTENUATION vs 200°C ATTENUATION

0037266



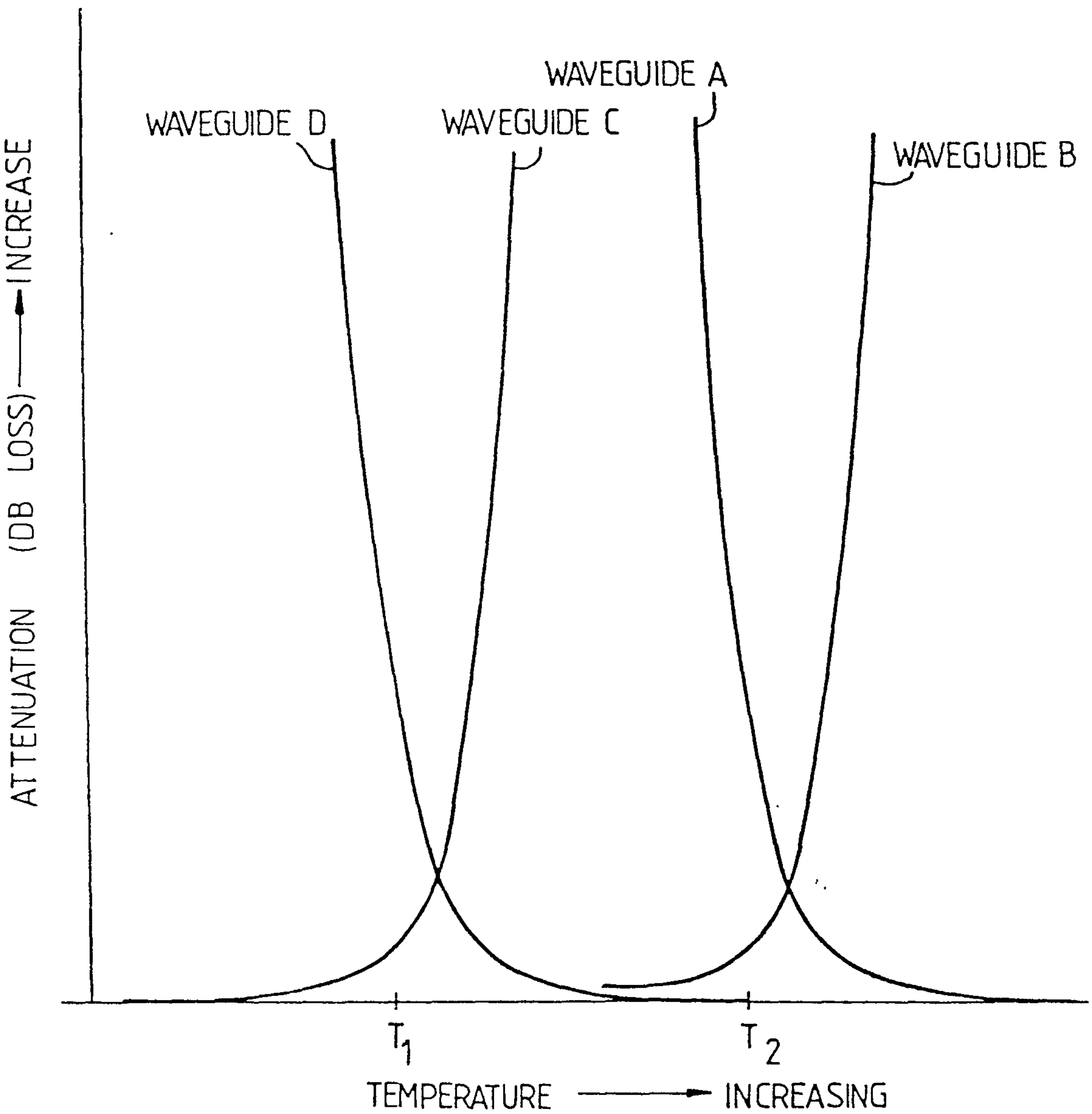


Fig.11